(19) Europäisches Patentamt
European Patent Office
Office européen des brevets

(11) EP 2 001 154 A1

(12) **DEMANDE DE BREVET EUROPEEN**

(43) Date de publication:
**10.12.2008 Bulletin 2008/50**

(51) Int Cl.:
*H04L 9/18* (2006.01)   *H04L 9/06* (2006.01)

(21) Numéro de dépôt: **07301086.0**

(22) Date de dépôt: **05.06.2007**

(84) Etats contractants désignés:
**AT BE BG CH CY CZ DE DK EE ES FI FR GB GR HU IE IS IT LI LT LU LV MC MT NL PL PT RO SE SI SK TR**
Etats d'extension désignés:
**AL BA HR MK RS**

(71) Demandeur: **Reffe, Nicolas**
**34000 Montpellier (FR)**

(72) Inventeur: **Reffe, Nicolas**
**34000 Montpellier (FR)**

(74) Mandataire: **David, Alain et al**
**Cabinet Beau de Loménie**
**158, rue de l'Université**
**75340 Paris Cedex 07 (FR)**

(54) **Procédé et dispositif de chiffrement/déchiffrement d'une séquence de données d'entrée**

(57)   L'invention concerne un dispositif et un procédé de chiffrement/déchiffrement d'une séquence de données d'entrée, dans lequel à partir d'une valeur initiale ($V_0$) d'un vecteur d'état V et d'une succession de mots d'entrées ($U_n$, $Y_n$) formant ladite séquence d'entrée, on génère de manière itérative une succession de valeurs dudit vecteur d'état et une succession de mots de sorties ($Y_n$, $U_n$), chaque itération comportant les étapes suivantes :

-une étape de génération pseudo-aléatoire dans laquelle on calcule une valeur courante ($V_n$) du vecteur d'état selon une application non inversible dépendante d'une valeur précédente ($V_{n-1}$) du vecteur d'état et,
-une étape de chiffrement/déchiffrement dans laquelle on calcule un mot de sortie courant ($Y_n$, $U_n$) selon une application réversible dépendante d'un mot d'entrée courant ($U_n$, $Y_n$) et de ladite valeur précédente ($V_{n-1}$) du vecteur d'état.

FIG.2

**Description**

Domaine technique de l'invention

L'invention se rapporte au domaine du chiffrement/déchiffrement et concerne un dispositif et un procédé de génération d'une séquence de données pseudo aléatoire et du chiffrement/déchiffrement d'une séquence de données d'entrée.

L'invention trouve une application très avantageuse en ce qu'elle permet un chiffrement/déchiffrement symétrique présentant un grand degré de sécurité et assurant une implémentation simple et efficace en matériel et en logiciel. On notera que, le chiffrement symétrique est employé couramment dans tous les types de communications, telles que les communications mobiles, l'Internet, les cartes à puce, etc.

Arrière-plan de l'invention

Les échanges de données chiffrées (ou cryptées) d'un grand débit se font systématiquement par l'intermédiaire d'algorithmes de chiffrage (ou cryptage) symétrique.

L'efficacité d'un algorithme de chiffrage symétrique est évaluée selon sa résistance à la cryptanalyse qui dépend du niveau du brassage de l'information à chiffrer et de l'absence de failles ainsi que de sa résistance à la force brute qui dépend de la taille élevée de la clé de chiffrement.

En outre, l'efficacité du chiffrage symétrique est aussi évaluée selon sa rapidité d'exécution. En effet, le débit de fonctionnement de l'algorithme de chiffrage doit être supérieur au débit maximum d'informations à chiffrer/déchiffrer (crypter/décrypter) de l'application concernée.

Ainsi, pour une application à haut débit, les intégrateurs de solutions sécurisées doivent faire face à un dilemme lors du choix d'un algorithme de chiffrage car, avec l'augmentation des débits d'information à traiter et à puissance de calcul constante, le temps affecté aux opérations de brassage de l'information décroît, entraînant des compromis en terme de résistance à la cryptanalyse.

Actuellement, le chiffrement symétrique peut être réalisée soit selon une technique de chiffrement par bloc soit selon une technique de chiffrement par flot.

Le chiffrement par bloc consiste à découper les données en blocs de taille généralement fixe (souvent une puissance de deux comprise entre 32 et 512 bits). Les blocs sont ensuite chiffrés les uns après les autres.

Afin d'éviter les fuites d'information lors des opérations de chiffrement (deux blocs en clair identiques donnent deux blocs chiffrés identiques), les blocs sont généralement chaînés entre eux à l'aide de modes opératoires.

Ainsi, les procédés de chiffrement par bloc, chaînés par mode opératoire, offrent un niveau de protection des données intrinsèquement élevé, et des tailles de clé conséquentes (malgré tout fixes et non paramétrables), mais présentent deux inconvénients majeurs.

En effet, leur conception de brassage de l'information, bien qu'implémentable matériellement, reste complexe et essentiellement optimisée pour une implémentation logicielle. L'implémentation matérielle offre des débits (bits codés par seconde) systématiquement plus faibles que les algorithmes de chiffrement par flot classiques du fait du nombre conséquent d'instructions de base à effectuer par cycle d'horloge.

Un autre inconvénient est le fait que la taille des blocs de données à chiffrer est fixe et à tendance à augmenter dans les dernières générations d'algorithmes, au fur et à mesure de l'augmentation des tailles de clés. Ces tailles de blocs ne correspondent pas aux besoins réels des applications (quelques octets sont généralement suffisants pour coder une valeur de façon suffisamment discriminante) et implique des regroupements (buffering, en anglais) et des temps de latence incompatibles avec la plupart des applications haut débit qui requièrent un flux constant de données.

Ces algorithmes de chiffrement par bloc, bien que surs, s'avèrent donc trop lents et peu adaptés aux données à traiter pour les applications de cryptage à haut débit.

En revanche, la technique de chiffrement par flot permet de traiter des données de longueur quelconque et n'a pas besoin de les découper en blocs de tailles fixes. Cette technique chiffre les données en continu de façon extrêmement rapide. Un chiffrement par flot se présente généralement sous la forme d'un générateur de nombres pseudo-aléatoires paramétré par une clé et un vecteur d'initialisation, avec lequel on opère un «ou-exclusif» (noté $\oplus$ et correspondant à une addition binaire modulo 2) entre un bit à la sortie du générateur et un bit provenant des données. Le chiffrement par flot est avantageusement utilisé lorsque les débits de données sont élevés et/ou lorsque il y'a une obligation de chiffrer/déchiffrer l'information en temps réel.

Les procédés de chiffrement par flot, bien qu'extrêmement rapide dans le cadre d'une implémentation matérielle, de par la simplicité et le nombre réduit des jeux d'instruction utilisées, présentent plusieurs carences sévères, généralement acceptées car elles sont le corollaire direct des débits élevés spécifiés.

En effet, le générateur pseudo-aléatoire, quelle que soit sa complexité qui conditionne la taille des cycles, évolue de façon déterministe et donc prévisible, limitant la taille des messages potentiellement chiffrables.

En outre, la conception même de ces algorithmes (ou-exclusif effectué entre le bit de sortie du générateur pseudo-aléatoire et un bit du message à chiffrer) rend le générateur pseudo-aléatoire directement observable dans le cadre d'une cryptanalyse classique. Autrement dit, l'état des sorties du générateur pseudo-aléatoire est directement accessible en combinant le texte clair et le texte chiffré par un ou-exclusif et offre en continu une information directement exploitable pour la cryptanalyse de l'algorithme.

De plus, compte tenu des propriétés de l'opérateur « ou-exclusif » utilisé, le vecteur d'initialisation doit impérativement être modifié pour chaque nouveau message chiffré, faute de quoi une fuite d'information sera constatée sur l'intégralité du message chiffré (par exemple, un premier message chiffré $\oplus$ un deuxième message chiffré = un premier message clair $\oplus$ un deuxième message dair).

Par ailleurs, le nombre de bits cryptés à chaque itération est limité à un (le générateur pseudo-aléatoire ne génère qu'un seul bit par itération) et ne correspond donc pas aux besoins réels des applications dont il protège les données.

Un autre inconvénient concerne le fait que les algorithmes de chiffrement par flot ont généralement de par leur conception une taille de clé fixe ou limitée, ce qui bride leur évolutivité et l'adéquation exacte aux besoins de profondeur de cryptage requis par l'application.

Objet et résumé de l'invention

L'invention concerne un procédé de chiffrement/déchiffrement d'une séquence de données d'entrée, dans lequel à partir d'une valeur initiale d'un vecteur d'état V et d'une succession de mots d'entrées formant ladite séquence d'entrée, on génère de manière itérative une succession de valeurs dudit vecteur d'état et une succession de mots de sorties, chaque itération comportant les étapes suivantes :

- une étape de génération pseudo-aléatoire dans laquelle on calcule une valeur courante du vecteur d'état selon une application non inversible dépendante d'une valeur précédente du vecteur d'état et,
- une étape de chiffrement/déchiffrement dans laquelle on calcule un mot de sortie courant selon une application réversible dépendante d'un mot d'entrée courant et de ladite valeur précédente du vecteur d'état.

Ainsi, on peut chiffrer/déchiffrer une séquence de données d'entrée formée par une succession de mots d'entrées de taille quelconque avec une rapidité optimale d'exécution tout en assurant une implémentation simple et efficace en matériel et en logiciel.

Avantageusement, à chaque itération l'étape de génération pseudo-aléatoire comporte en outre, une alimentation dudit vecteur d'état par une valeur intermédiaire courante $X_\alpha$ issue d'un calcul réalisé à l'étape de chiffrement/déchiffrement et dépendante de ladite valeur précédente du vecteur d'état et dudit mot d'entrée courant.

Ainsi, les valeurs successives du vecteur d'état dépendent de l'intégralité de la séquence de données d'entrée. De plus, le vecteur d'état présente une évolution non déterministe. Ceci assure un chiffrement/déchiffrement présentant un grand degré de sécurité.

Selon une particularité de l'invention, ledit vecteur d'état comporte un ensemble de sections comprenant au moins une première variable d'état X, une deuxième variable d'état A, et une troisième variable d'état B.

Ainsi, les sections peuvent assurer un auto-isolement du vecteur d'état et peuvent apporter une pluralité de fonctionnalités avantageuses comme par exemple la variation du nombre de bits des mots d'entrée. De même, dans le cadre d'un multiplexage, on peut obtenir un ordonnancement des blocs de données apportant plus de fiabilité et de sécurité.

L'étape de génération pseudo-aléatoire de chaque itération peut comporter les sous-étapes suivantes:

- transmission à l'étape de chiffrement/déchiffrement de la valeur précédente du vecteur d'état comprenant au moins la valeur précédente $X_{n-1}$ de la première variable d'état, la valeur précédente $A_{n-1}$ de la deuxième variable d'état, et la valeur précédente $B_{n-1}$ de la troisième variable d'état,
- réception depuis l'étape de chiffrement/déchiffrement de la valeur intermédiaire courante $X_a$,
- calcul d'une valeur courante d'un premier vecteur d'état intermédiaire $V_{int1}$ en remplaçant la valeur précédente $X_{n-1}$ de la première variable d'état par ladite valeur intermédiaire courante $X_\alpha$, et
- application d'une permutation surjective sur ladite valeur courante du premier vecteur d'état intermédiaire $V_{int1}$ pour former une valeur courante d'un second vecteur d'état intermédiaire $V_{int2}$.

Ainsi, les données pseudo-aléatoire présentent une grande qualité tout en étant simple à générer et à implémenter en matériel et en logiciel.

Ladite valeur courante du vecteur d'état correspond à ladite valeur courante du second vecteur d'état intermédiaire $V_{int2}$.

Ainsi, le calcul de la valeur courante du vecteur d'état est très simple.

Selon une variante, ladite valeur courante du vecteur d'état correspond au résultat d'une opération ou-exclusif entre la valeur courante du premier vecteur d'état intermédiaire $V_{int1}$ et la valeur courante du second vecteur d'état intermédiaire $V_{int2}$.

Cette variante permet d'augmenter la complexité de la génération de valeurs successives pseudo-aléatoire du vecteur d'état.

Selon une autre variante, ladite valeur courante du vecteur d'état correspond au résultat d'une opération ou-exclusif entre un vecteur constant $X_c$ et la valeur courante du second vecteur d'état intermédiaire $V_{int2}$.

Cette autre variante permet d'augmenter encore davantage la complexité de la génération de valeurs successives pseudo-aléatoire en produisant des cycles de plus en plus long.

Avantageusement, ladite étape de génération pseudo-aléatoire est une première étape de génération pseudo-aléatoire formant une première valeur courante d'un premier vecteur d'état, ladite première étape de génération pseudo-aléatoire étant combinée en parallèle avec au moins une deuxième étape de génération pseudo-aléatoire formant une deuxième valeur courante d'un deuxième vecteur d'état et en ce que ladite valeur courante du vecteur d'état est le résultat d'une opération ou-exclusif entre la première valeur courante du premier vecteur d'état et ladite au moins deuxième valeur courante du deuxième vecteur d'état.

Ainsi, on augmente la complexité des données successives pseudo-aléatoire en produisant des cycles de plus en plus grands.

Ladite étape de chiffrement/déchiffrement peut comporter une réception depuis l'étape de génération pseudo-aléatoire de la valeur précédente du vecteur d'état comprenant au moins la valeur précédente $X_{n-1}$ de la première variable d'état, la valeur précédente $A_{n-1}$ de la deuxième variable d'état, et la valeur précédente $B_{n-1}$ de la troisième variable d'état, et en ce que l'application réversible pour le calcul du mot de sortie courant comporte deux fonctions d'isolement pour isoler la valeur intermédiaire courante, chacune des fonctions d'isolement comprenant au moins une permutation bijective et une opération ou-exclusif.

Ainsi, on isole le vecteur d'état des mots d'entrée et de sortie et par conséquent, on écarte toute observation directe ou toute reconstruction ou pilotage de la succession de valeurs du vecteur d'état. De plus, il n'est pas nécessaire de modifier la valeur initiale du vecteur d'état pour éviter une fuite d'information.

Le procédé selon l'invention comporte un mode de chiffrement dans lequel la séquence de données d'entrée correspond à un message clair et la succession de mots de sorties correspond à un message chiffré, et en ce que dans ledit mode de chiffrement ledit calcul d'un mot de sortie courant $Y_n$ comporte les sous-étapes suivantes:

- calcul d'un premier mot intermédiaire $G_{1n}$ en appliquant une première permutation bijective sur un couple formé par ledit mot d'entrée courant $U_n$ et une valeur précédente $A_{n-1}$ de la deuxième variable d'état,
- calcul d'un deuxième mot intermédiaire $G_{2n}$ en appliquant une opération ou-exclusif entre ledit premier mot intermédiaire $G_{1n}$ et ladite valeur précédente $A_{n-1}$ de la deuxième variable d'état,
- calcul d'un troisième mot intermédiaire $G_{3n}$ en appliquant une deuxième permutation bijective sur un couple formé par ledit deuxième mot intermédiaire $G_{2n}$ et une valeur précédente $X_{n-1}$ de la première variable d'état,
- calcul de ladite valeur intermédiaire courante $X_\alpha$ en appliquant une opération ou-exclusif entre ledit troisième mot intermédiaire $G_{3n}$ et ladite valeur précédente $X_{n-1}$ de la première variable d'état, ladite valeur intermédiaire courante $X_\alpha$ étant transmise à l'étape de génération pseudo-aléatoire,
- calcul d'un quatrième mot intermédiaire $G_{4n}$ en appliquant une troisième permutation bijective sur un couple formé par ladite valeur intermédiaire courante $X_a$ et la valeur précédente $X_{n-1}$ de la première variable d'état,
- calcul d'un cinquième mot intermédiaire $G_{5n}$ en appliquant une opération ou-exclusif entre ledit quatrième mot intermédiaire $G_{4n}$ et ladite valeur précédente $B_{n-1}$ de la troisième variable d'état, et
- calcul dudit mot de sortie courant $Y_n$ en appliquant une quatrième permutation bijective sur un couple formé par ledit cinquième mot intermédiaire $G_{5n}$ et une valeur précédente $B_{n-1}$ de la troisième variable d'état.

Ainsi, le chiffrement présente un grand niveau de protection tout en étant simple à implémenter en matériel et en logiciel.

Le procédé selon l'invention comporte un mode de déchiffrement dans lequel la séquence de données d'entrée correspond à un message chiffré et la succession de mots de sorties correspond à un message clair et en ce que dans ledit mode de déchiffrement ledit calcul d'un mot de sortie courant Un comporte les sous étapes suivantes:

- calcul du cinquième mot intermédiaire $G_{5n}$ en appliquant une permutation inverse de la quatrième permutation bijective sur un couple formé par un mot d'entrée courant $Y_n$ et la valeur précédente $B_{n-1}$ de la troisième variable d'état,
- calcul du quatrième mot intermédiaire $G_{4n}$ en appliquant une opération ou-exclusif entre ledit cinquième mot intermédiaire $G_{5n}$ et ladite valeur précédente $B_{n-1}$ de la troisième variable d'état,
- calcul de ladite valeur intermédiaire courante $X_a$ en appliquant une permutation inverse de la troisième permutation bijective sur un couple formé par ledit quatrième mot intermédiaire $G_{4n}$ et la valeur précédente $X_{n-1}$ de la première variable d'état, ladite valeur intermédiaire courante $X_a$ étant transmise à l'étape de génération pseudo-aléatoire,

- calcul du troisième mot intermédiaire $G_{3n}$ en appliquant une opération ou-exclusif entre ladite valeur intermédiaire courante $X_\alpha$ et ladite valeur précédente $X_{n-1}$ de la première variable d'état,
- calcul du deuxième mot intermédiaire $G_{2n}$ en appliquant une permutation inverse de la deuxième permutation bijective sur un couple formé par ledit troisième mot intermédiaire $G_{3n}$ et la valeur précédente $X_{n-1}$ de la première variable d'état,
- calcul du premier mot intermédiaire $G_{1n}$ en appliquant une opération ou-exclusif entre ledit deuxième mot intermédiaire $G_{2n}$ et ladite valeur précédente $A_{n-1}$ de la deuxième variable d'état,
- calcul dudit mot de sortie courant $U_n$ en appliquant une permutation inverse de la première permutation bijective sur un couple formé par ledit premier mot intermédiaire $G_{1n}$ et la valeur précédente $A_{n-1}$ de la deuxième variable d'état.

Ainsi, le déchiffrement présente un grand niveau de protection. De plus, le déchiffrement est réalisé selon des opérations inverses de celles du chiffrement ce qui présente surtout un grand intérêt d'implémentation matériel.

Ledit vecteur d'état comprend un nombre k déterminé de bits et ladite valeur initiale du vecteur d'état correspond à une clé de chiffrement/déchiffrement paramétrable de taille k, et en ce que chaque mot de sortie ou d'entrée comprend un nombre m déterminé de bits inférieur audit nombre k déterminé de bits dudit vecteur d'état.

Ainsi, on a un procédé de chiffrement/déchiffrement à clé dans lequel la taille des mots et de la clé sont ajustables.

Avantageusement, chaque mot de sortie ou d'entrée comprend un nombre w variable de bits pouvant varier à chaque itération tout en étant inférieur audit nombre k déterminé de bits du vecteur d'état et en ce que ledit vecteur d'état comporte en outre une quatrième variable d'état E indiquant ledit nombre w variable de bits à chaque itération pour adapter les permutations et opérateurs ou-exclusifs de l'étape de chiffrement/déchiffrement audit nombre w variable.

Ainsi, la taille des mots à chiffrer ou à déchiffrer change à chaque itération de façon pseudo-aléatoire en fonction de la séquence de données d'entrée et de la clé assurant une protection encore plus grande.

Selon un aspect de l'invention, l'étape de génération pseudo-aléatoire de chaque itération peut comporter lorsque ledit nombre w variable est égal à zéro, une application supplémentaire d'une permutation surjective sur ladite valeur du vecteur d'état pour former une valeur courante d'un second vecteur d'état intermédiaire supplémentaire $V2_{ins}$, ladite valeur courante du second vecteur d'état intermédiaire supplémentaire $V2_{ins}$ remplaçant ladite valeur courante du vecteur d'état.

Selon une variante, on calcul une nouvelle valeur courante du vecteur d'état en appliquant une opération ou-exclusif entre ladite valeur courante du second vecteur d'état intermédiaire supplémentaire $V2_{ins}$ et la valeur courante du vecteur d'état, ladite nouvelle valeur courante du vecteur d'état remplaçant ladite valeur courante du vecteur d'état.

Selon une autre variante, on calcul une nouvelle valeur courante du vecteur d'état en appliquant une opération ou-exclusif entre ladite valeur courante du second vecteur d'état intermédiaire supplémentaire $V2_{ins}$ et un vecteur constant $X_c$, ladite nouvelle valeur courante du vecteur d'état remplaçant ladite valeur courante du vecteur d'état.

Ainsi, la succession de valeurs du vecteur d'état est générée à vide tant que w reste égale à zéro sans interaction avec l'étape de chiffrement/déchiffrement. Autrement dit, les opérations effectuées lors de l'étape de génération pseudo-aléatoire se désynchronisent de celles effectuées lors de l'étape de chiffrement/déchiffrement apportant encore plus de protection, en s'affranchissant éventuellement de l'utilisation de mots de taille variable tel que décrit précédemment.

Avantageusement, une permutation appliquée selon l'invention sur des données à permuter comporte les étapes suivantes :

- on associe pour chaque bit de ladite clé de chiffrement/déchiffrement de taille k, deux permutations élémentaires distinctes sélectionnées en fonction de la valeur dudit bit, et
- on enchaîne sur lesdites données à permuter, k permutations élémentaires paramétrées par la valeur de chacun des k bits de ladite clé de chiffrement/déchiffrement.

Ainsi, la permutation présente une taille ajustable paramétrée par la clé de chiffrement/déchiffrement et est extrêmement rapide en implémentation matérielle ou logicielle. De plus, la taille de la permutation peut être très importante impliquant un meilleur brassage des données à permuter.

Avantageusement, ledit vecteur d'état comporte un premier ensemble de sections de variables d'état et au moins un deuxième ensemble de sections de variables d'état ;

en ce que ladite étape de chiffrement/déchiffrement est une première étape de chiffrement/déchiffrement dans laquelle on calcule un premier mot de sortie courant selon une première application réversible dépendante d'un premier mot d'entrée courant et dudit premier ensemble de sections de ladite valeur précédente du vecteur d'état ; et

en ce qu'il comprend au moins une deuxième étape de chiffrement/déchiffrement dans laquelle on calcule au moins un deuxième mot de sortie courant selon au moins une deuxième application réversible dépendante d'au moins un deuxième mot d'entrée courant et dudit au moins deuxième ensemble de sections de ladite valeur précédente du vecteur d'état.

Ainsi, on peut multiplexer plusieurs signaux avec un même vecteur d'état permettant de simplifier l'implémentation matérielle ou logicielle.

Le procédé selon l'invention peut comporter en outre un multiplexage cryptographique d'au moins deux blocs de messages en clair pour former au moins deux blocs de messages chiffrés, chaque bloc de message en clair correspondant à une succession de mots d'entrées, et en ce que lesdits au moins deux blocs de messages chiffrés sont ordonnancés à chaque itération en fonction d'une cinquième variable d'état F comprise dans ledit vecteur d'état.

Ainsi, l'ordonnancement ou le mixage à chaque itération des M blocs cryptés, combinés ou non, dans des canaux de transmission est pseudo-aléatoire dépendant de la clé de chiffrement/déchiffrement et de l'intégralité des séquences d'entrées. Par conséquent, toute modification dans les séquences d'entrées modifie le mixage, assurant ainsi une protection optimale.

L'invention vise également un procédé de génération d'une séquence de données pseudo aléatoire, dans lequel à partir d'une valeur initiale d'un vecteur d'état, on forme ladite séquence de données pseudo aléatoire par une génération itérative d'une succession de valeurs dudit vecteur d'état, chaque itération calculant une valeur courante du vecteur d'état selon une application non inversible dépendante d'une valeur précédente du vecteur d'état.

Ainsi, on peut générer à chaque itération un nombre quelconque de bits pseudo-aléatoire inférieur ou égal à la taille du vecteur d'état permettant d'augmenter la rapidité d'exécution tout en assurant une implémentation simple et efficace en matériel et en logiciel.

Avantageusement, à chaque itération, on alimente ledit vecteur d'état par une valeur intermédiaire courante calculée selon une autre application dépendante de ladite valeur précédente du vecteur d'état et d'un mot d'entrée courant appartenant à une séquence de données d'entrée.

Ainsi, la séquence de données pseudo aléatoire ne présente pas une période particulière et ne suit pas de cycle pré-établi. En effet, la valeur du vecteur d'état dépend de la valeur initiale et de l'intégralité de la séquence de données d'entrée appliquées, sans cycle déterministe, car basculant à chaque itération d'un attracteur à un autre. Ceci assure une évolution non prévisible et non déterministe de la séquence de données pseudo aléatoire.

L'invention vise aussi un dispositif de chiffrement/déchiffrement d'une séquence de données d'entrée, caractérisé en ce qu'il comporte des moyens de génération pour générer de manière itérative une succession de valeurs d'un vecteur d'état et une succession de mots de sorties à partir d'une valeur initiale dudit vecteur d'état et d'une succession de mots d'entrées formant ladite séquence d'entrée, lesdits moyens de génération comportant :

- un générateur pseudo-aléatoire destiné à calculer à chaque itération une valeur courante du vecteur d'état selon une application non inversible dépendante d'une valeur précédente du vecteur d'état et,
- un module de chiffrement/déchiffrement destiné à calculer à chaque itération un mot de sortie courant selon une application réversible dépendante d'un mot d'entrée courant et de ladite valeur précédente du vecteur d'état.

A chaque itération ledit générateur pseudo-aléatoire alimente ledit vecteur d'état par une valeur intermédiaire courante $X_\alpha$ issue d'un calcul réalisé par le module de chiffrement/déchiffrement et dépendante de ladite valeur précédente du vecteur d'état et dudit mot d'entrée courant.

Ledit générateur pseudo-aléatoire comporte :

- des moyens de transmission pour transmettre à chaque itération audit module de chiffrement/déchiffrement la valeur précédente du vecteur d'état comprenant au moins une valeur précédente $X_{n-1}$ d'une première variable d'état, une valeur précédente $A_{n-1}$ d'une deuxième variable d'état, et une valeur précédente $B_{n-1}$ d'une troisième variable d'état,
- des moyens de réception pour recevoir depuis le module de chiffrement/déchiffrement la valeur intermédiaire courante $X_a$,
- un premier moyen de calcul pour calculer une valeur courante d'un premier vecteur d'état intermédiaire $V_{int1}$ en remplaçant la valeur précédente $X_{n-1}$ de la première variable d'état par ladite valeur intermédiaire courante $X_\alpha$, et
- un deuxième moyen de calcul comprenant des moyens de permutation surjective pour appliquer une permutation surjective sur ladite valeur courante du premier vecteur d'état intermédiaire $V_{int1}$ pour former une valeur courante d'un second vecteur d'état intermédiaire $V_{int2}$

Ledit générateur pseudo-aléatoire comporte on outre un troisième moyen de calcul comprenant une porte ou-exclusif combinant la valeur courante du premier vecteur d'état intermédiaire $V_{int1}$ et la valeur courante du second vecteur d'état intermédiaire $V_{int2}$.

Ledit générateur pseudo-aléatoire comporte en outre un troisième moyen de calcul comprenant une porte ou-exclusif combinant un vecteur constant $X_c$ et la valeur courante du second vecteur d'état intermédiaire $V_{int2}$.

Avantageusement, le dispositif de chiffrement/déchiffrement comporte un premier générateur pseudo-aléatoire formant une première valeur courante d'un premier vecteur d'état et au moins un deuxième générateur pseudo-aléatoire formant au moins une deuxième valeur courante d'un deuxième vecteur d'état et en ce qu'il comporte en outre une porte ou-exclusif combinant en parallèle lesdits premier et au moins deuxième générateurs pseudo-aléatoire de sorte que ladite valeur courante du vecteur d'état est le résultat d'une opération ou-exclusif entre la première valeur courante du premier vecteur d'état et ladite au moins deuxième valeur courante du deuxième vecteur d'état.

Ledit module de chiffrement/déchiffrement comporte des moyens de réception pour recevoir depuis le générateur pseudo-aléatoire la valeur précédente du vecteur d'état comprenant au moins la valeur précédente $X_{n-1}$ de la première variable d'état, la valeur précédente $A_{n-1}$ de la deuxième variable d'état, et la valeur précédente $B_{n-1}$ de la troisième variable d'état, et deux moyens d'isolement pour isoler la valeur intermédiaire courante, chacun des moyens d'isolement comprenant au moins un moyen de permutation bijective et une porte ou-exclusif.

Avantageusement, un moyen de permutation comporte des portes logiques destinées à associer pour chaque bit d'une clé de chiffrement/déchiffrement de taille k correspondant à la valeur initial dudit vecteur d'état, deux permutations élémentaires distinctes sélectionnées en fonction de la valeur dudit bit, et à enchaîner k permutations élémentaires paramétrées par la valeur de chacun des k bits de ladite clé de chiffrement/déchiffrement.

Le module de chiffrement/déchiffrement comprend des moyens de permutation et opérateurs ou-exclusifs adaptables à un mot de sortie ou d'entrée comprenant un nombre w variable de bits pouvant varier à chaque itération, ledit nombre w variable de bits étant indiqué par une quatrième variable d'état E comprise dans ledit vecteur d'état.

Ledit générateur pseudo-aléatoire peut comprend un quatrième moyen de calcul permettant d'effectuer des itérations à vide sur ledit vecteur d'état en fonction de la valeur w indiquée par la quatrième variable d'état E.

Avantageusement, ledit générateur pseudo-aléatoire est destiné à calculer à chaque itération une valeur courante d'un vecteur d'état comportant un premier ensemble de sections de variables d'état et au moins un deuxième ensemble de sections de variables d'état ;

en ce que le module de chiffrement/déchiffrement correspond à un premier module de chiffrement/déchiffrement destiné à calculer un premier mot de sortie courant selon une première application réversible dépendante d'un premier mot d'entrée courant et dudit premier ensemble de sections de la valeur précédente dudit vecteur d'état ;

et en ce qu'il comprend en outre au moins un deuxième module de chiffrement/déchiffrement destiné à calculer au moins un deuxième mot de sortie courant selon au moins une deuxième application réversible dépendante d'au moins un deuxième mot d'entrée courant et dudit au moins deuxième ensemble de sections de ladite valeur précédente du vecteur d'état.

Avantageusement, le dispositif de chiffrement/déchiffrement comporte en outre des moyens de multiplexage cryptographique pour multiplexer au moins deux blocs de messages en clair pour former au moins deux blocs de messages chiffrés, chaque bloc de message en clair correspondant à une succession de mots d'entrées, et en ce que lesdits moyens de multiplexage cryptographique sont destinés à ordonnancer lesdits au moins deux blocs de messages chiffrés à chaque itération en fonction d'une cinquième variable d'état F comprise dans ledit vecteur d'état.

L'invention vise aussi un générateur pseudo-aléatoire d'une séquence de données pseudo aléatoire, comprenant des moyens de calcul dans lesquels à partir d'une valeur initiale d'un vecteur d'état, on forme ladite séquence de données pseudo aléatoire par une génération itérative d'une succession de valeurs dudit vecteur d'état, chaque itération calculant une valeur courante du vecteur d'état selon une application non inversible dépendante d'une valeur précédente du vecteur d'état.

L'invention vise également un programme d'ordinateur comportant des instructions de code de programme pour la mise en oeuvre du procédé de chiffrement/déchiffrement selon l'une quelconque des caractéristiques ci-dessus, lorsque ledit programme est chargé et exécuté dans un ordinateur ou un système informatique.

Brève description des dessins

D'autres particularités et avantages de l'invention ressortiront à la lecture de la description faite, ci-après, à titre indicatif mais non limitatif, en référence aux dessins annexés, sur lesquels :

- la figure 1 illustre schématiquement un générateur pseudo-aléatoire d'une séquence de données pseudo aléatoire, selon l'invention ;
- les figures 2 à 8 illustre schématiquement des exemples d'un dispositif de chiffrement/déchiffrement d'une séquence de données d'entrée, selon l'invention ;
- les figures 9A à 9C illustrent des exemples de permutations utilisées dans le générateur pseudo-aléatoire ou le dispositif de chiffrement/déchiffrement des figures précédentes ;
- les figures 10A et 10B illustrent des exemples d'implémentation matériel des permutations des figures 9A-9C ;
- les figures 11A à 11C illustrent des exemples de multiplexages cryptographiques ; et
- les figures 12 et 13 illustrent des applications du dispositif de chiffrement/déchiffrement selon l'invention à des multiplexages cryptographique.

Description détaillée de modes de réalisation

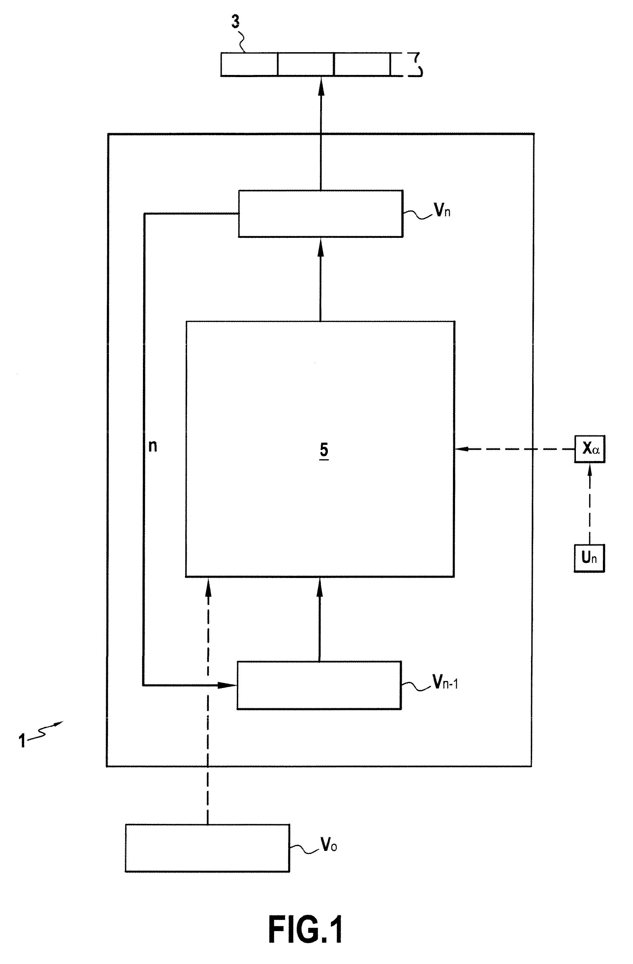

Conformément à l'invention, la figure 1 illustre un exemple schématique d'un générateur 1 pseudo-aléatoire d'une séquence de données pseudo aléatoire 3. On notera que la figure 1 est également une illustration des principales étapes du procédé de génération d'une séquence de données pseudo aléatoire.

Le générateur 1 pseudo-aléatoire comporte des moyens de calcul 5 dans lesquels à partir d'une valeur initiale $V_0$ d'un vecteur d'état, on forme la séquence de données pseudo aléatoire 3 par une génération itérative d'une succession de valeurs $V_{n-1}$, $V_n$ du vecteur d'état. A chaque itération n, les moyens de calcul 5 calculent une valeur courante $V_n$ du vecteur d'état selon une application non inversible dépendante d'une valeur précédente $V_{n-1}$ du vecteur d'état. On notera que $V_n$ correspond à la valeur prise par le vecteur d'état V à la $n^{ième}$ itération. De même, on utilise la même convention pour les autres variables.

Avantageusement, on alimente le vecteur d'état à chaque itération n, par une valeur intermédiaire courante $X_\alpha$ calculée selon une autre application qui peut dépendre de la valeur précédente $V_{n-1}$ du vecteur d'état et d'un mot d'entrée courant $U_n$ appartenant à une séquence de données d'entrée.

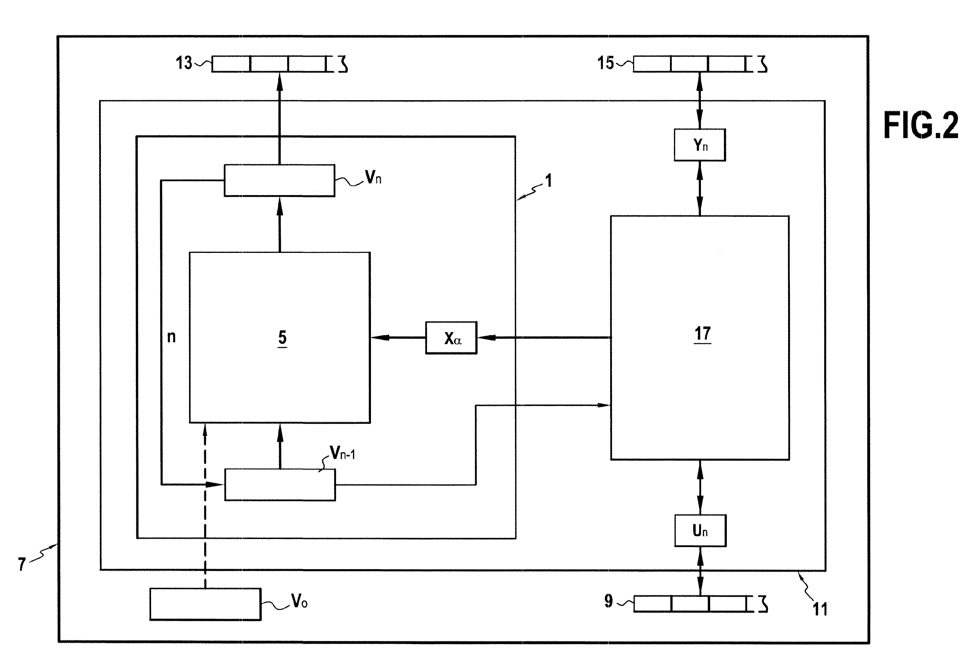

Les figures 2 à 12 montrent que le générateur 1 pseudo-aléatoire peut être utilisé en combinaison avec un module de chiffrement/déchiffrement pour chiffrer/déchiffrer une succession de mots d'entrée. On notera que les figures 2 à 12 sont également des illustrations des principales étapes du procédé de chiffrement/déchiffrement d'une séquence de données d'entrée. Dans ce cas, la valeur intermédiaire courante $X_\alpha$ peut être calculée par le module de chiffrement/déchiffrement selon une application indépendante de celle du générateur pseudo-aléatoire.

En effet, la figure 2 illustre un dispositif 7 de chiffrement/déchiffrement d'une séquence de données d'entrée 9 (respectivement 15). Ce dispositif 7 comporte des moyens de génération 11 pour générer de manière itérative une succession de valeurs 13 d'un vecteur d'état et une succession de mots de sorties 15 (respectivement 9) à partir d'une valeur initiale $V_0$ du vecteur d'état et d'une succession de mots d'entrées Un (respectivement $Y_n$) formant la séquence d'entrée.

Ces moyens de génération 11 comportent un générateur 1 pseudo-aléatoire selon la figure 1 et un module 17 de chiffrement/déchiffrement.

Ainsi, à chaque itération n, le générateur 1 pseudo-aléatoire calcule une valeur courante $V_n$ du vecteur d'état selon l'application non inversible dépendante de la valeur précédente $V_{n-1}$ du vecteur d'état et le module 17 de chiffrement/déchiffrement calcule un mot de sortie courant $Y_n$ (respectivement $U_n$) selon une application réversible dépendante d'un mot d'entrée courant $U_n$ (respectivement $Y_n$) et de la valeur précédente $V_{n-1}$ du vecteur d'état. On notera que le dispositif 7 de chiffrement/déchiffrement peut être utilisé de manière réversible pour le chiffrement ou le déchiffrement.

Selon cet exemple, le générateur 1 pseudo-aléatoire alimente, à chaque itération n, le vecteur d'état par la valeur intermédiaire courante $X_\alpha$ issue d'un calcul réalisé par le module 17 de chiffrement/déchiffrement et dépendante de la valeur précédente $V_{n-1}$ du vecteur d'état et du mot d'entrée courant $U_n$ (respectivement $Y_n$).

On notera que le vecteur d'état V comprend un nombre k déterminé de bits et que la valeur initiale $V_0$ du vecteur d'état correspond à une clé de chiffrement/déchiffrement paramétrable de taille k.

La taille k de la clé de chiffrement/déchiffrement correspond au nombre de bits de la clé, et donc au nombre de bits du vecteur d'état V. Par ailleurs, un mot d'entrée ou de sortie $U_n/Y_n$ est d'une taille m correspondant au nombre de bits qui sont chiffrés ou déchiffrés par le module 17 de chiffrement/déchiffrement à chaque itération. Ces valeurs k et m peuvent être préétablis.

Le générateur 1 pseudo-aléatoire est basé sur une fonction à sens unique et peut être utilisé lors d'un procédé de chiffrement de la même façon que lors d'un procédé de déchiffrement. Par ailleurs, le module 17 de chiffrement/déchiffrement est réversible et peut alors être utilisé en effectuant les opérations de chiffrement/déchiffrement en ordre inverse. Ainsi, lors d'un procédé de chiffrement, un mot d'entrée est noté Un (données claires) et un mot de sortie est noté $Y_n$ (données chiffrées), tandis que lors d'un procédé de déchiffrement, un mot d'entrée est noté $Y_n$ (données chiffrées), et un mot de sortie est noté Un (données claires).

Plus particulièrement, avant le démarrage d'un procédé de chiffrement, la valeur de la clé chiffrement devient la valeur initiale $V_0$ du vecteur d'état V ($V_0$ = clé).

A la première itération, le module 17 de chiffrement/déchiffrement calcule le premier mot de sortie $Y_1$ (correspondant à un mot chiffré) en fonction du premier mot d'entrée $U_1$ (correspondant à un mot en clair) et de la valeur initiale $V_0$ du vecteur d'état. De plus, le générateur 1 pseudo-aléatoire calcule une première valeur $V_1$ du vecteur d'état V en fonction du premier mot d'entrée $U_1$ et de la valeur initiale $V_0$ du vecteur d'état.

Par extension, à la $n^{ième}$ itération, le module 17 de chiffrement/déchiffrement calcule le mot de sortie courant $Y_n$ en fonction du mot d'entrée courant $U_n$ et de la valeur précédente $V_{n-1}$ du vecteur d'état. De plus, le générateur 1 pseudo-aléatoire calcule une valeur courante $V_n$ du vecteur d'état V en fonction du mot d'entrée courant Un et de la valeur précédente $V_{n-1}$ du vecteur d'état.

De la même manière, avant le démarrage d'un procédé de déchiffrement, la valeur de la clé de déchiffrement devient la valeur initiale $V_0$ du vecteur d'état V ($V_0$ = clé).

A la première itération de déchiffrement, le module 17 de chiffrement/déchiffrement calcule le premier mot de sortie $U_1$ (correspondant à un mot déchiffré) en fonction du premier mot d'entrée $Y_1$ (correspondant à un mot chiffré) et de la valeur initiale $V_0$ du vecteur d'état. De plus, le générateur 1 pseudo-aléatoire calcule une première valeur $V_1$ du vecteur d'état V en fonction du premier mot d'entrée $Y_1$ et de la valeur initiale $V_0$ du vecteur d'état.

Par extension, à la $n^{ième}$ itération, le module 17 de chiffrement/déchiffrement calcule le mot de sortie courant Un en fonction du mot d'entrée courant $Y_n$ et de la valeur précédente $V_{n-1}$ du vecteur d'état. De plus, le générateur 1 pseudo-aléatoire calcule une valeur courante $V_n$ du vecteur d'état V en fonction du mot d'entrée courant $Y_n$ et de la valeur précédente $V_{n-1}$ du vecteur d'état.

Avantageusement, le vecteur d'état V comporte un ensemble de sections comprenant au moins une première variable d'état X, une deuxième variable d'état A, une troisième variable d'état B, et éventuellement d'autre variable d'état. Par exemple, la valeur courante $V_n$ du vecteur d'état V peut être structuré de la manière suivante :

$$V_n = \left( \cdots \left( X_n = \left( x_{n1}...x_{nm} \right) \right).... \left( A_n = \left( a_{n1}...a_{nm} \right) \right).. \left( B_n = \left( b_{n1}...b_{nm} \right) \right) \cdots \right)$$

Selon cet exemple, la valeur courante $X_n$ de la première variable d'état X comprend m bits $x_{n1},...x_{nm}$, la valeur courante $A_n$ de la deuxième variable d'état A comprend m bits $a_{n1},...a_{nm}$, et la valeur courante $B_n$ de la troisième variable d'état B comprend m bits $b_{n1},...b_{nm}$.

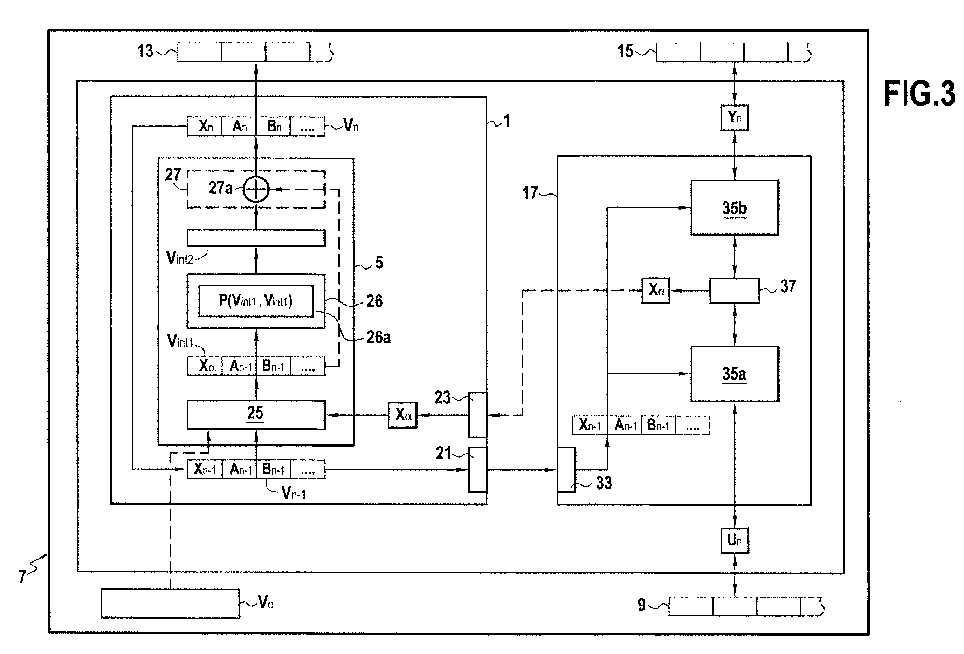

Plus particulièrement, la valeur $X_n$ de la première variable d'état X est utilisée lors d'une itération suivante par des fonctions d'isolement du module 17 de chiffrement/déchiffrement avant d'être remplacée par la valeur intermédiaire $X_\alpha$ issue du calcul réalisé à l'itération suivante par le module 17 de chiffrement/déchiffrement. Les valeurs $A_n$ et $B_n$ des deuxième et troisième variables d'état sont aussi utilisées lors d'une itération suivante par les fonctions d'isolement du module 17 de chiffrement/déchiffrement (voir figure 3).

Les emplacements des variables d'état sont de préférence à position fixe, mais il est possible de leur affecter une position variable en fonction de la ou des valeurs prises par une ou plusieurs sections du vecteur d'état, elles-mêmes à position fixe. Seule la solution d'une position fixe des variables d'état est décrite par la suite.

Par ailleurs, il est préférable (mais non nécessaire) que les secteurs affectés à chacune des variables d'état ne se chevauchent pas. La taille k du vecteur d'état est alors choisie en conséquence.

La figure 3 illustre un exemple plus détaillé d'un dispositif 7 de chiffrement/déchiffrement selon la figure 2.

Selon cet exemple, le générateur 1 pseudo-aléatoire comporte des moyens de transmission 21, des moyens de réception 23, et des moyens de calcul 25, 26 et éventuellement 27.

A chaque itération (par exemple, à l'itération n), les moyens de transmission 21 transmettent au module 17 de chiffrement/déchiffrement la valeur précédente $V_{n-1}$ du vecteur d'état comprenant au moins la valeur précédente $X_{n-1}$ de la première variable d'état X, la valeur précédente $A_{n-1}$ de la deuxième variable d'état A, et la valeur précédente $B_{n-1}$ de la troisième variable d'état B.

Les moyens de réception 23 reçoivent depuis le module 17 de chiffrement/déchiffrement la valeur intermédiaire courante $X_\alpha$.

Un premier moyen de calcul 25 remplace la valeur précédente $X_{n-1}$ de la première variable d'état X par la valeur intermédiaire courante $X_\alpha$ pour calculer une valeur courante d'un premier vecteur d'état intermédiaire $V_{int1}$.

Un deuxième moyen de calcul 26 comprend des moyens de permutation surjective 26a qui appliquent une permutation surjective $P = ( V_{int1}, V_{int1})$ sur la valeur courante du premier vecteur d'état intermédiaire $V_{int1}$ pour former une valeur courante d'un second vecteur d'état intermédiaire $V_{int2}$. Ainsi, la valeur courante $V_n$ du vecteur d'état V correspond à la valeur courante du second vecteur d'état intermédiaire $V_{int2}$.

Selon une variante, les moyens de calcul 5 du générateur 1 pseudo-aléatoire comporte en outre un troisième moyen de calcul 27 comprenant une porte ou-exclusif 27a combinant la valeur courante du premier vecteur d'état intermédiaire $V_{int1}$ et la valeur courante du second vecteur d'état intermédiaire $V_{int2}$. L'opération ou-exclusif outre son aspect non réversible, confère un degré de dispersion supérieur au générateur 1 pseudo-aléatoire.

Selon une autre variante, la porte ou-exclusif 27a du troisième moyen de calcul 27 combine la valeur courante du second vecteur d'état intermédiaire $V_{nt2}$ avec un vecteur constant $V_c$ (non représenté) prédéfini et de même taille que le vecteur d'état V.

Ainsi, les moyens de calcul 5 du générateur 1 pseudo-aléatoire réalisent une permutation non inversible sur le premier vecteur d'état intermédiaire $V_{int1}$ dont le résultat est optionnellement composé avec ce premier vecteur d'état intermédiaire $V_{int1}$ ou avec un vecteur constant $V_c$.

Après les opérations ci-dessus de l'itération n, la valeur courante $V_n$ du vecteur d'état V est disponible pour une itération suivante n+1.

Par ailleurs, on notera qu'il est possible d'implémenter plusieurs générateurs en parallèle pour un même module de chiffrement/déchiffrement.

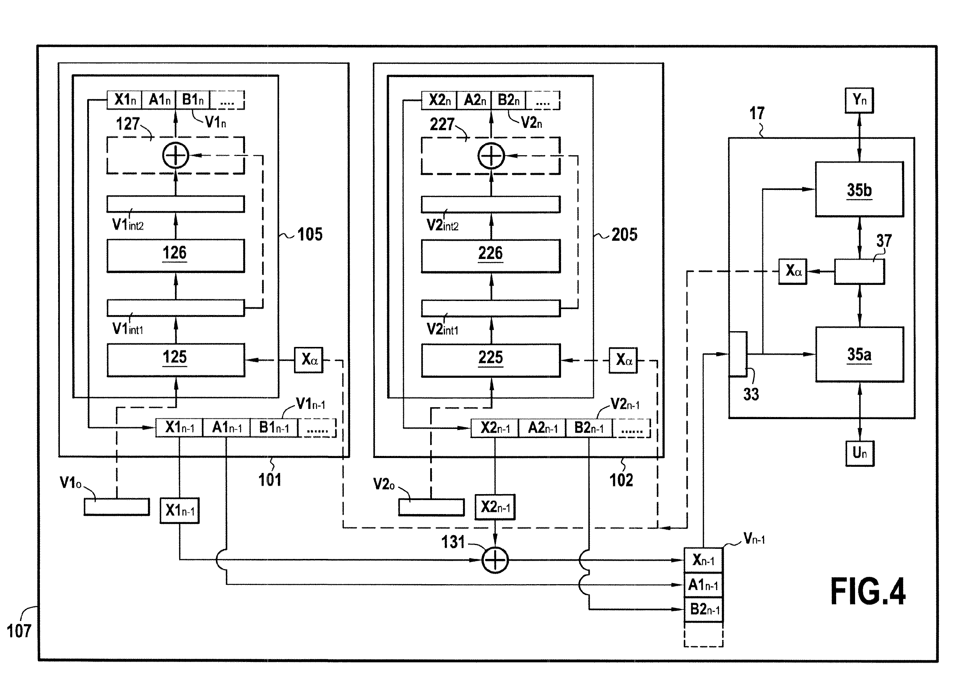

A titre d'exemple, la figure 4 illustre un dispositif de chiffrement/déchiffrement 107 comportant deux générateurs 101, 102 pseudo-aléatoires et un module 17 de chiffrement/déchiffrement.

Le premier générateur 101 pseudo-aléatoire forme une première valeur courante $V1_n$ d'un premier vecteur d'état V1 et le deuxième générateur 102 pseudo-aléatoire forme une deuxième valeur courante $V2_n$ d'un deuxième vecteur d'état V2.

Les deux générateurs 101, 102 pseudo-aléatoires peuvent être combinés entre eux en parallèle au moyen par exemple, d'une porte ou-exclusif. Dans ce cas, la valeur courante $V_n$ du vecteur d'état est le résultat d'une opération ou-exclusif entre la première valeur courante $V1_n$ du premier vecteur d'état et la deuxième valeur courante $V2_n$ du deuxième vecteur d'état. On notera que toute autre combinaison est possible, par exemple, la valeur courante $V_n$ du vecteur d'état issus des deux générateurs 101, 102 pseudo-aléatoire peut être composé d'une première section provenant de la première valeur courante $V1_n$ du premier vecteur d'état, d'une deuxième section provenant de la deuxième valeur courante $V2_n$ du deuxième vecteur d'état, et d'une troisième section provenant d'une combinaison quelconque entre des sections correspondantes des première et deuxième valeurs courantes $V1_n$, $V2_n$ des premier et deuxième vecteurs d'état.

Plus particulièrement, dans l'exemple de la figure 4, le premier générateur 101 pseudo-aléatoire est alimenté par une première valeur initiale $V1_0$ et génère une première valeur courante $V1_n$ d'un premier vecteur d'état $V1_n$ comprenant au moins une première valeur courante $X1_n$ de la première variable d'état X1, une première valeur courante $A1_n$ de la deuxième variable d'état A1, et une première valeur courante $B1_n$ de la troisième variable d'état B1. En outre, le deuxième générateur 102 pseudo-aléatoire est alimenté par une deuxième valeur initiale $V2_0$ et génère une deuxième valeur courante $V2_n$ d'un deuxième vecteur d'état $V2_n$ comprenant au moins une deuxième valeur courante $X2_n$ de la première variable d'état X2, une deuxième valeur courante $A2_n$ de la deuxième variable d'état A2, et une deuxième valeur courante $B2_n$ de la troisième variable d'état B1.

Selon cet exemple particulier, la valeur précédente $V_{n-1}$ du vecteur d'état transmise au module 17 de chiffrement/déchiffrement est formée par une valeur précédente $X_{n-1}$ de la première variable d'état X résultant d'une opération ou-exclusif entre la première valeur précédente $X1_{n-1}$ de la première variable d'état X1 du premier vecteur d'état et la deuxième valeur précédente $X2_{n-1}$ de la première variable d'état X2 du deuxième vecteur d'état, une valeur précédente $A_{n-1}=A1_{n-1}$ de la deuxième variable d'état A1 provenant du premier vecteur d'état et une valeur précédente $B_{n-1}=B2_{n-1}$ de la troisième variable d'état B2 provenant du deuxième vecteur d'état. Par ailleurs, les deux générateurs 101, 102 pseudo-aléatoire sont alimentés par la même valeur intermédiaire courante $X_\alpha$ issue du module 107 de chiffrement/déchiffrement.

Ainsi, d'une manière générale, il est possible d'implémenter h générateurs pseudo-aléatoire en parallèle (i = 1 à h) pour un même module de chiffrement/déchiffrement. Les h générateurs pseudo-aléatoire sont alors tous alimentés par une même valeur intermédiaire courante $X_\alpha$ issue du module de chiffrement/déchiffrement. Les h générateurs peuvent être de tailles identiques ou différentes $k_1,...,k_h$. Leurs valeurs initiales $V1_0,...,V1_h$ peuvent être extraites ou calculées à partir d'une même clé de chiffrement/déchiffrement commune dont la taille est égale au max de $k_i,....,k_h$. Les valeurs de $A_n$ et $B_n$ peuvent provenir d'un même générateur ou bien de générateurs différents. $X_n$ peut correspondre au résultat d'une combinaison par des ou-exclusifs de l'ensemble des $Xi_n$ respectifs : $X_n = X1_n \oplus X2_n \oplus .... \oplus Xh_n$.

Bien entendu, les différents générateurs pseudo-aléatoires en parallèles peuvent être utilisés indépendamment du module de chiffrement/déchiffrement pour générer une séquence de données pseudo aléatoire d'une grande qualité.

Par ailleurs, le module 17 de chiffrement/déchiffrement (voir aussi figure 3) comporte des moyens de réception 33, des moyens d'isolement 35a et 35b et éventuellement un moyen de liaison 37 entre les moyens d'isolement 35a et 35b.

Les moyens de réception 33 reçoivent depuis le générateur 1 pseudo-aléatoire (ou les générateurs 101, 102) la valeur précédente $V_{n-1}$ du vecteur d'état comprenant au moins la valeur précédente $X_{n-1}$ de la première variable d'état X, la valeur précédente $A_{n-1}$ de la deuxième variable d'état A, et la valeur précédente $B_{n-1}$ de la troisième variable d'état B.

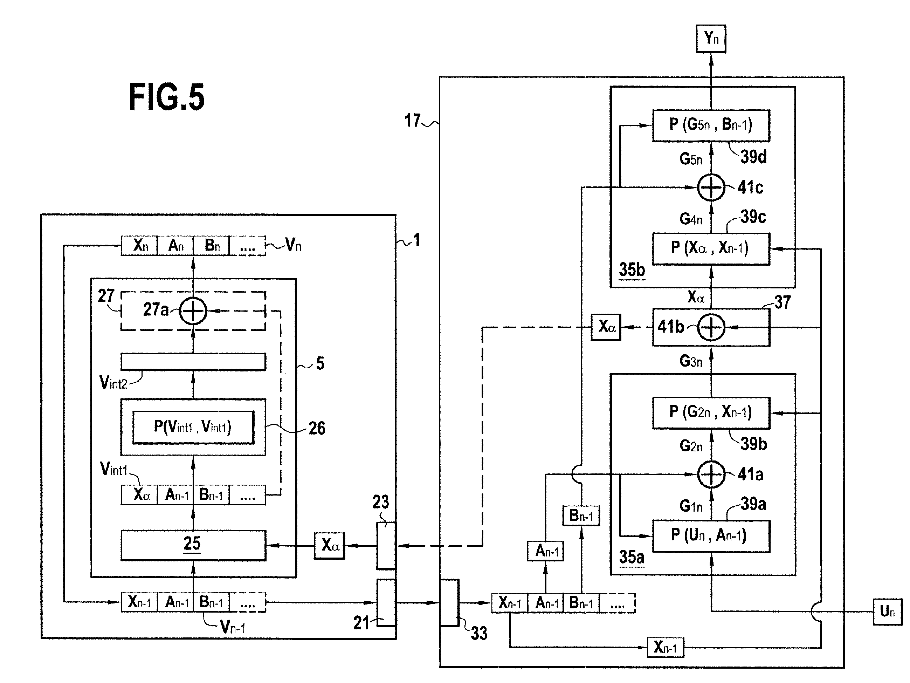

Les moyens d'isolement comprennent au moins deux moyens d'isolement 35a et 35b pour isoler la valeur intermédiaire courante $X_\alpha$. Chaque moyen d'isolement comprend au moins un moyen de permutation bijective et une porte ou-exclusif et le moyen de liaison 37 peut comporter une porte ou-exclusif (voir figure 5).

Ainsi, le dispositif 7 de chiffrement/déchiffrement comporte deux éléments interconnectés, c'est-à-dire, un générateur 1 pseudo-aléatoire (ou groupe de générateurs 101, 102) paramétré par une clé de taille k quelconque, et un module 17 de chiffrement/déchiffrement intégrant des fonctions d'isolement.

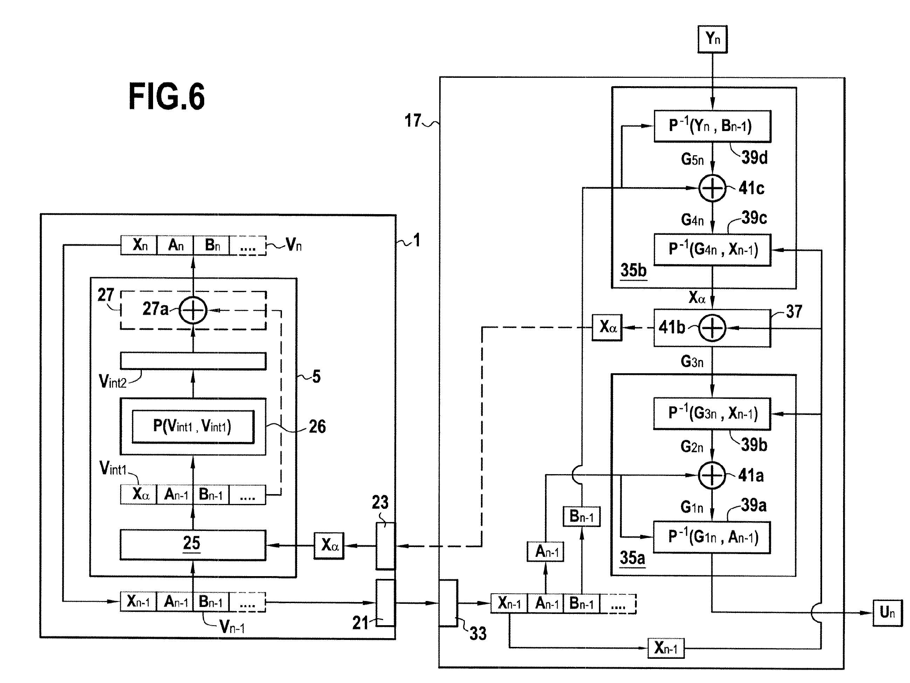

Les figures 5 et 6 illustrent avec plus de détails des modes de chiffrage et de déchiffrage d'une séquence de données d'entrée.

Plus particulièrement, la figure 5 illustre le dispositif de chiffrement/déchiffrement lors d'un mode de chiffrement dans lequel la séquence de données d'entrée correspond à un message clair et la succession de mots de sorties correspond à un message chiffré. Selon cet exemple, le moyen de liaison 37 entre le premier moyen d'isolement 35a et le deuxième moyen d'isolement 35b comporte une porte ou-exclusif centrale 41b.

Le premier moyen d'isolement 35a comprend des premier et second moyens de permutation bijective 39a, 39b séparés par une première porte ou-exclusif 41a. Le deuxième moyen d'isolement 35b comprend des troisième et quatrième moyens de permutation bijective 39c, 39d séparés par une deuxième porte ou-exclusif 41c.

Selon ce mode de chiffrement le calcul d'un mot de sortie courant $Y_n$ lors d'une itération n comporte les opérations suivantes:

Le premier moyen de permutation 39a calcule un premier mot intermédiaire $G_{1n}$ en appliquant une première permutation bijective sur un couple formé par le mot d'entrée courant Un et une valeur précédente $A_{n-1}$ de la deuxième variable d'état : $G_{1n} = P(U_n, A_{n-1})$.

La première porte ou-exclusif 41a calcule un deuxième mot intermédiaire $G_{2n}$ en appliquant une opération ou-exclusif entre le premier mot intermédiaire $G_{1n}$ et la valeur précédente $A_{n-1}$ de la deuxième variable d'état : $G_{2n} = G_{1n} \oplus A_{n-1}$.

Le deuxième moyen de permutation 39b calcule un troisième mot intermédiaire $G_{3n}$ en appliquant une deuxième permutation bijective sur un couple formé par le deuxième mot intermédiaire $G_{2n}$ et une valeur précédente $X_{n-1}$ de la première variable d'état : $G_{3n} = P(G_{2n}, X_{n-1})$.

La porte ou-exclusif centrale 41b calcule la valeur intermédiaire courante $X_\alpha$ en appliquant une opération ou-exclusif entre le troisième mot intermédiaire $G_{3n}$ et la valeur précédente $X_{n-1}$ de la première variable d'état : $X_\alpha = G_{3n} \oplus X_{n-1}$. Cette valeur intermédiaire courante $X_\alpha$ est ensuite transmise au générateur 1 pseudo-aléatoire.

Ensuite, le troisième moyen de permutation 39c calcule un quatrième mot intermédiaire $G_{4n}$ en appliquant une troisième permutation bijective sur un couple formé par la valeur intermédiaire courante $X_\alpha$ et la valeur précédente $X_{n-1}$ de la première variable d'état : $G_{4n} = P(X_\alpha, X_{n-1})$.

La troisième porte ou-exclusif 41c calcule un cinquième mot intermédiaire $G_{5n}$ en appliquant une opération ou-exclusif entre le quatrième mot intermédiaire $G_{4n}$ et la valeur précédente $B_{n-1}$ de la troisième variable d'état : $G_{5n} = G_{4n} \oplus B_{n-1}$.

Finalement, le quatrième moyen de permutation 39d calcule le mot de sortie courant $Y_n$ en appliquant une quatrième permutation bijective sur un couple formé par le cinquième mot intermédiaire $G_{5n}$ et une valeur précédente $B_{n-1}$ de la troisième variable d'état: $Y_n = P(G_{5n}, B_{n-1})$.

La figure 6 illustre le dispositif de chiffrement/déchiffrement lors d'un mode de déchiffrement dans lequel la séquence de données d'entrée correspond à un message chiffré et la succession de mots de sorties correspond à un message clair.

Selon ce mode de déchiffrement le calcul d'un mot de sortie courant Un lors d'une itération n comporte les opérations suivantes:

Le quatrième moyen de permutation 39d calcule un cinquième mot intermédiaire $G_{5n}$ en appliquant une per-mutation inverse de la quatrième permutation bijective sur un couple formé par un mot d'entrée courant $Y_n$ et la valeur précédente $B_{n-1}$ de la troisième variable d'état : $G_{5n} = P^{-1}(Y_n, B_{n-1})$.

La troisième porte ou-exclusif 41c calcule un quatrième mot intermédiaire $G_{4n}$ en appliquant une opération ou-exclusif entre le cinquième mot intermédiaire $G_{5n}$ et la valeur précédente $B_{n-1}$ de la troisième variable d'état : $G_{4n} = G_{5n} \oplus B_{n-1}$.

Le troisième moyen de permutation 39c calcule la valeur intermédiaire courante $X_\alpha$ en appliquant une permu-tation inverse de la troisième permutation bijective sur un couple formé par le quatrième mot intermédiaire $G_{4n}$ et la valeur précédente $X_{n-1}$ de la première variable d'état : $X_\alpha = P^{-1}(G_{4n}, X_{n-1})$. Cette valeur intermédiaire courante $X_\alpha$ est ensuite transmise au générateur pseudo-aléatoire.

La porte ou-exclusif centrale 41b calcule un troisième mot intermédiaire $G_{3n}$ en appliquant une opération ou-exclusif entre la valeur intermédiaire courante $X_\alpha$ et la valeur précédente $X_{n-1}$ de la première variable d'état : $G_{3n} = X_\alpha \oplus X_{n-1}$.

Le deuxième moyen de permutation 39b calcule un deuxième mot intermédiaire $G_{2n}$ en appliquant une per-mutation inverse de la deuxième permutation bijective sur un couple formé par le troisième mot intermédiaire $G_{3n}$ et la valeur précédente $X_{n-1}$ de la première variable d'état : $G_{2n} = P^{-1}(G_{3n}, X_{n-1})$.

La première porte ou-exclusif 41a calcule un premier mot intermédiaire $G_{1n}$ en appliquant une opération ou-exclusif entre le deuxième mot intermédiaire $G_{2n}$ et la valeur précédente $A_{n-1}$ de la deuxième variable d'état : $G_{1n} = G_{2n} \oplus A_{n-1}$.

Finalement, le premier moyen de permutation 39a calcule le mot de sortie courant Un en appliquant une permutation inverse de la première permutation bijective sur un couple formé par le premier mot intermédiaire $G_{1n}$ et la valeur précédente $A_{n-1}$ de la deuxième variable d'état : $Un = P^{-1}(G_{1n}, A_{n-1})$.

Ainsi, selon les exemples des figures 5 et 6, les fonctions ou moyens d'isolement 35a et 35b sont composés chacune de deux permutation paramétrées par $A_{n-1}$ et $X_{n-1}$ pour le premier moyen d'isolement 35a, $B_{n-1}$ et $X_{n-1}$ pour le deuxième moyen d'isolement 35b, et d'un ou exclusif avec $A_{n-1}$ pour le premier moyen d'isolement 35a et avec $B_{n-1}$ pour le deuxième moyen d'isolement 35b. La valeur intermédiaire courante $X_\alpha$ est donc isolé au milieu de quatre permutations paramétrées par $A_{n-1}$, $X_{n-1}$ et $B_{n-1}$, et trois ou-exclusifs avec les variables d'état $A_{n-1}$, $X_{n-1}$ et $B_{n-1}$, du vecteur d'état V, lui-même isolé des entrées et des sorties. Ceci correspond à un auto-isolement du vecteur d'état V.

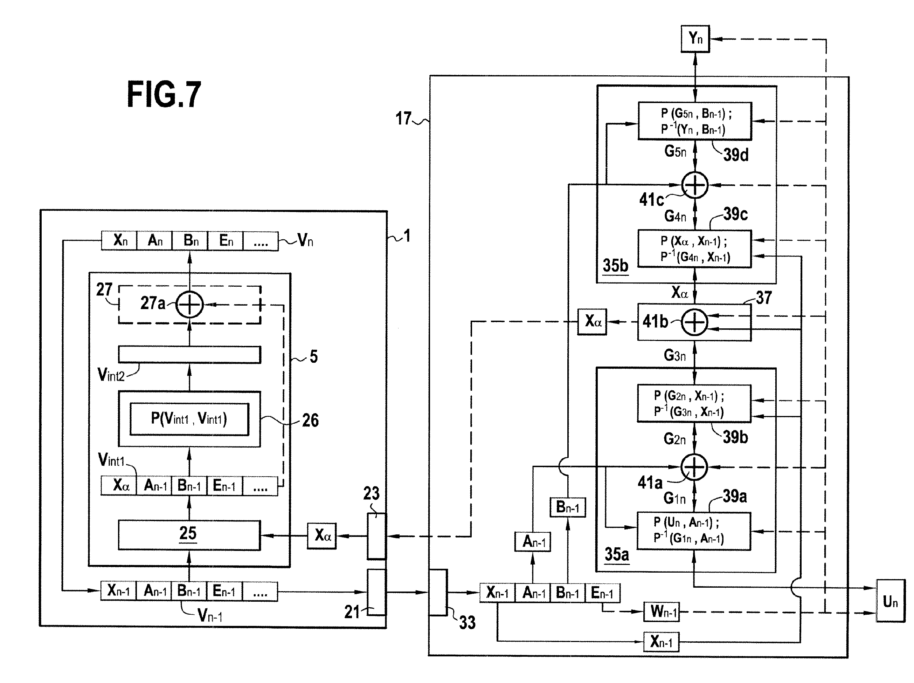

On notera que l'ordre chronologique des deux premières opérations de la figure 6 ou de la figure 7 peuvent être interverties sous réserve que celui des sixième et septième opérations le soit aussi afin que le module 17 de chiffrement/déchiffrement reste symétrique.

Par ailleurs, la complexité des opérations de chiffrement/déchiffrement peut être augmentée davantage en remplaçant chacun des variables d'état $A_n$, $B_n$ et $X_n$ par deux sous-variables de taille identique: respectivement $A_n'$ et $A_n''$ pour $A_n$, $B_n'$ et $B_n''$ pour $B_n$ et $X_n'$ et $X_n''$ pour $X_n$. Les sous-variables $A_n'$, $B_n'$ et $X_n'$ peuvent être utilisés pour paramétrer les permutations P et $P^{-1}$ et les sous-variables $A_n''$, $B_n''$ et $X_n''$ peuvent être utilisés pour le calcul des opérations ou-exclusif.

Selon les exemples précédents, le vecteur d'état comprend un nombre k déterminé de bits et chaque mot de sortie ou d'entrée comprend un nombre m déterminé de bits inférieur au nombre k déterminé de bits du vecteur d'état.

Avantageusement, chaque mot de sortie ou d'entrée peut comprendre un nombre w variable de bits pouvant varier à chaque itération tout en étant inférieur audit nombre k déterminé de bits du vecteur d'état.

En effet, la figure 7 illustre un dispositif de chiffrement/déchiffrement d'un nombre w variable de bits.

Dans ce cas, le vecteur d'état V comporte une quatrième variable d'état E indiquant ce nombre w variable de bits à chaque itération pour adapter les permutations et opérateurs ou-exclusifs réalisés par les moyens de permutation et portes ou-exclusifs du module 17 de chiffrement/déchiffrement à ce nombre w variable.

Ainsi, les permutations P, $P^{-1}$ et l'opérateur ou-exclusif « $\oplus$ » utilisés par le module 17 de chiffrement/déchiffrement sont adaptables à des mots d'entrée et de sortie $U_n/Y_n$ de longueur w quelconque (w $\leq$ m <k). Sous réserve de préétablir des tables de permutation correspondant à toutes les valeurs de w envisageables, et d'effectuer les ou-exclusifs avec les w premiers bits des variables d'état $A_{n-1}$, $X_{n-1}$ et $B_{n-1}$, il est possible de découper les données d'entrée en blocs de taille w variable et d'effectuer le chiffrement/déchiffrement de ces blocs par le module 17 de chiffrement/déchiffrement.

Le paramètre indiquant le nombre w de bits d'entrée à chiffrer/déchiffrer lors de l'itération n est fourni par la valeur précédente $E_{n-1}$ du quatrième variable d'état E. Cette quatrième variable d'état E est une section de taille r du vecteur d'état, isolé des entrées et des sorties et dépendant de la clé de chiffrement/déchiffrement et de l'intégralité de la séquence des mots d'entrées $U_n/Y_n$ appliquées.

Ainsi, lors de l'itération n, la taille $W_{n-1}$ du bloc à traiter est transmis au mot d'entrée $U_n/Y_n$ ou mot de sortie $Y_n/U_n$ ainsi qu'au moyens de permutation 39a-39d et portes logiques 41a-41c pour dimensionner les permutations et les ou-exclusifs.

Le nombre de bits cryptés à chaque itération est donc pseudo-aléatoire, dépendant de la clé de chiffrement/déchiffrement et de l'intégralité de la séquence des mots d'entrée $U_n/Y_n$ appliquées. La moindre modification de la séquence des mots d'entrée $U_n/Y_n$ entraîne donc systématiquement une modification de l'intégralité du découpage des données postérieur à cette modification.

Afin d'extraire le nombre w de bits à chiffrer/déchiffrer lors de l'itération n de la valeur précédente $E_{n-1}$ du quatrième variable d'état E, on peut affecter à w la valeur décimale codée sur les r bits de la valeur précédente $E_{n-1}$ de la quatrième variable d'état : 0 < w < $2^r$ -1 (= m). En variante, on peut affecter à w la valeur du nombre de bits à 1 dans la valeur précédente $E_{n-1}$ du quatrième variable d'état : 0 < w < r (= m).

On notera que par convention, et quelle que soit la valeur initiale $E_0$ du quatrième variable d'état E, on fixe le nombre de bits initial $w_0$=1. Ainsi, lors de la première itération, on chiffre/déchiffre systématiquement un seul bit.

Avantageusement, afin de ne pas laisser fuir d'information concernant le découpage effectué, on peut regrouper les mots de sortie $Y_n/U_n$ de façon à libérer en sortie des blocs de longueur constant m uniquement. On peut utiliser la même précaution pour les mots d'entrée $U_n/Y_n$ lors du déchiffrage.

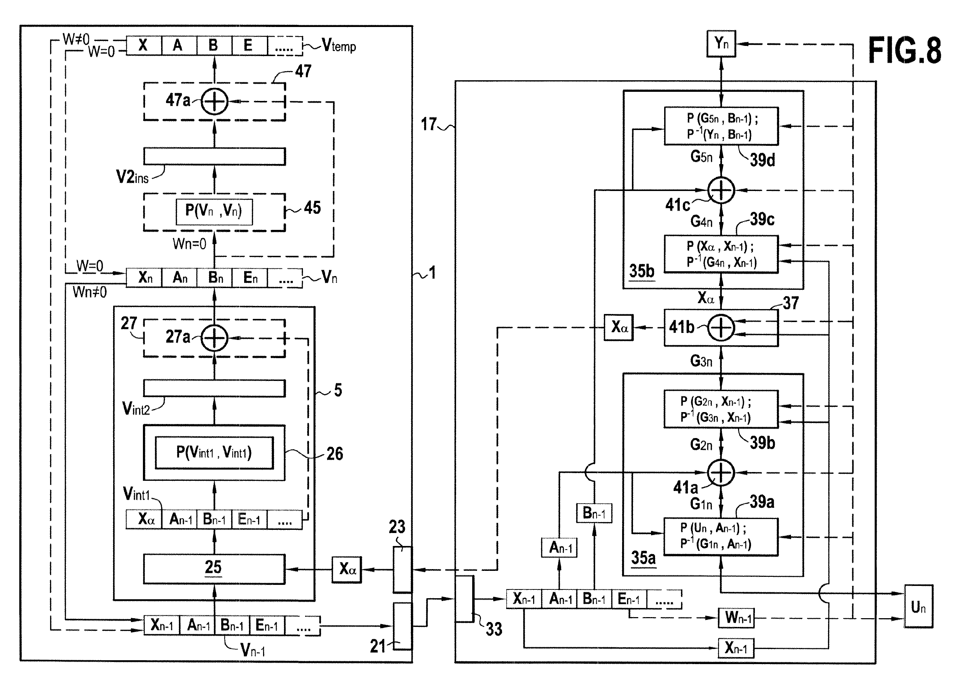

La figure 8 illustre un dispositif de chiffrement/déchiffrement comportant un générateur 1 pseudo-aléatoire comprenant un quatrième moyen de calcul 45 pour effectuer des itérations à vide sur le vecteur d'état V en fonction de la valeur w indiquée par la quatrième variable d'état E. Le quatrième moyen de calcul 45 comprend des moyens de permutation surjective supplémentaires.

Ainsi, l'étape de génération pseudo-aléatoire de chaque itération comporte lorsque le nombre w variable est égal à zéro, l'application par le quatrième moyen de calcul 45 d'une permutation surjective sur la valeur courante $V_n$ du vecteur d'état pour former une valeur courante d'un second vecteur d'état intermédiaire supplémentaire $V2_{ins}$. Cette valeur courante du second vecteur d'état intermédiaire supplémentaire $V2_{ins}$ remplace alors la valeur courante $V_n$ du vecteur d'état V.

Selon une variante, le générateur 1 pseudo-aléatoire comporte éventuellement un cinquième moyen de calcul 47 comprenant une porte ou-exclusif 47a supplémentaire permettant de calculer une nouvelle valeur courante $V_{temp}$ du vecteur d'état en appliquant une opération ou-exclusif entre la valeur courante du second vecteur d'état intermédiaire supplémentaire $V2_{ins}$ et la valeur courante $V_n$ du vecteur d'état. Cette nouvelle valeur courante $V_{temp}$ du vecteur d'état remplace alors la valeur courante $V_n$ du vecteur d'état.

Selon une autre variante, la porte ou-exclusif 47a supplémentaire calcule une nouvelle valeur courante $V_{temp}$ du vecteur d'état en appliquant une opération ou-exclusif entre la valeur courante du second vecteur d'état intermédiaire supplémentaire $V2_{ins}$ et un vecteur constant $V_c$ (non représenté). Cette nouvelle valeur courante $V_{temp}$ du vecteur d'état remplace alors la valeur courante $V_n$ du vecteur d'état.

Ainsi, la figure 8 montre que lorsque w = 0, le générateur 1 pseudo-aléatoire effectue des itérations « à vide » sur le vecteur d'état V tant que w reste à 0, sans incorporer la valeur intermédiaire courante $X_\alpha$ dans le vecteur d'état V puisque aucune opération de chiffrage/déchiffrage sur les mots d'entrée $U_n/Y_n$ ou sortie $Y_n/U_n$ n'est effectuée (autrement dit, on chiffre/déchiffre 0 bits).

Plus particulièrement, avant le démarrage d'un procédé de chiffrement, la valeur de la clé de chiffrement devient la valeur initiale $V_0$ du vecteur d'état V : $V_0$ = clé et $w_0$=1

A la première itération, le module 17 de chiffrement/déchiffrement prend le premier bit du mot d'entrée $U_1$ à chiffrer et calcule la valeur du premier bit du mot de sortie $Y_1$ chiffré en fonction de $U_1$ et de la valeur initiale $V_0$ du vecteur d'état V. En outre, le générateur 1 pseudo-aléatoire calcule une première valeur $V_1$ du vecteur d'état V en fonction de $U_1$ et $V_0$.

Par extension, à la $n^{\text{ième}}$ itération, si $w_{n-1}$=0, le générateur 1 pseudo-aléatoire effectue des itérations «à vide » sur la valeur précédente $V_{n-1}$ du vecteur d'état, tant que $W_{n-1}$=0.

En revanche, si $w_{n-1}\neq0$, le module 17 de chiffrement/déchiffrement prend les $W_{n-1}$ bits suivants des données à chiffrer (bloc $U_n$) et calcule la valeur du mot de sortie $Y_n$ en fonction de Un et $V_{n-1}$. En outre, le générateur 1 pseudo-aléatoire calcule une nouvelle valeur $V_n$ du vecteur d'état V, en fonction de $U_n$ et $V_{n-1}$.

De manière symétrique, avant le démarrage d'un procédé de déchiffrement, la valeur de la clé de déchiffrement devient la valeur initiale $V_0$ du vecteur d'état V : $V_0$ = clé et $w_0$= 1

A la première itération, le module 17 de chiffrement/déchiffrement prend le premier bit du mot d'entrée $Y_1$ à déchiffrer et calcule la valeur du premier bit du mot de sortie $U_1$ déchiffré en fonction de $Y_1$ et de la valeur initiale $V_0$ du vecteur d'état V. En outre, le générateur 1 pseudo-aléatoire calcule une première valeur $V_1$ du vecteur d'état V en fonction de $Y_1$ et $V_0$.

Par extension, à la $n^{\text{ième}}$ itération, si $w_{n-1}$=0, le générateur 1 pseudo-aléatoire effectue des itérations « à vide » sur la valeur précédente $V_{n-1}$ du vecteur d'état, tant que $w_{n-1}$=0.

En revanche, si $w_{n-1}\neq0$, le module 17 de chiffrement/déchiffrement prend les $w_{n-1}$ bits suivants des données à déchiffrer (bloc $Y_n$) et calcule la valeur du mot de sortie Un en fonction de $Y_n$ et $V_{n-1}$. En outre, le générateur 1 pseudo-aléatoire calcule une nouvelle valeur $V_n$ du vecteur d'état V, en fonction de $Y_n$ et $V_{n-1}$.

Ainsi, les opérations de l'exemple de la figure 8 font que les itérations effectuées sur le générateur 1 pseudo-aléatoire se désynchronisent des itérations effectuées par le module 17 de chiffrement/déchiffrement, en fonction d'une variable pseudo-aléatoire non-accessible (quatrième variable d'état E), de la clé de chiffrement/déchiffrement et de i'intégralité de la séquence des mots d'entrée $U_n/Y_n$ appliquées. La moindre modification de la séquence des mots entrée $U_n/Y_n$ entraîne donc systématiquement une modification de l'intégralité du découpage des données postérieur à cette modification et donc une modification de la façon dont le générateur 1 pseudo-aléatoire se désynchronise du module 17 de chiffrement/déchiffrement.

Par ailleurs, on notera qu'on peut faire varier la taille des blocs à chiffrer/déchiffrer sans avoir à traiter le cas où w=0 afin d'éviter la désynchronisation des flux et les cycles à vide, on convient alors de chiffrer/déchiffrer systématiquement un seul bit lorsque w=0.

Il est aussi possible de ne conserver que la fonctionnalité de désynchronisation des flux, sans faire varier la taille des blocs à chiffrer/déchiffrer. On effectue alors un cycle à vide sur le générateur 1 pseudo-aléatoire si w=0 tandis que pour toute autre valeur de w, on chiffre/déchiffre un mot d'entrée $U_n/Y_n$ ou de sortie $Y_n/U_n$ de taille m fixe.

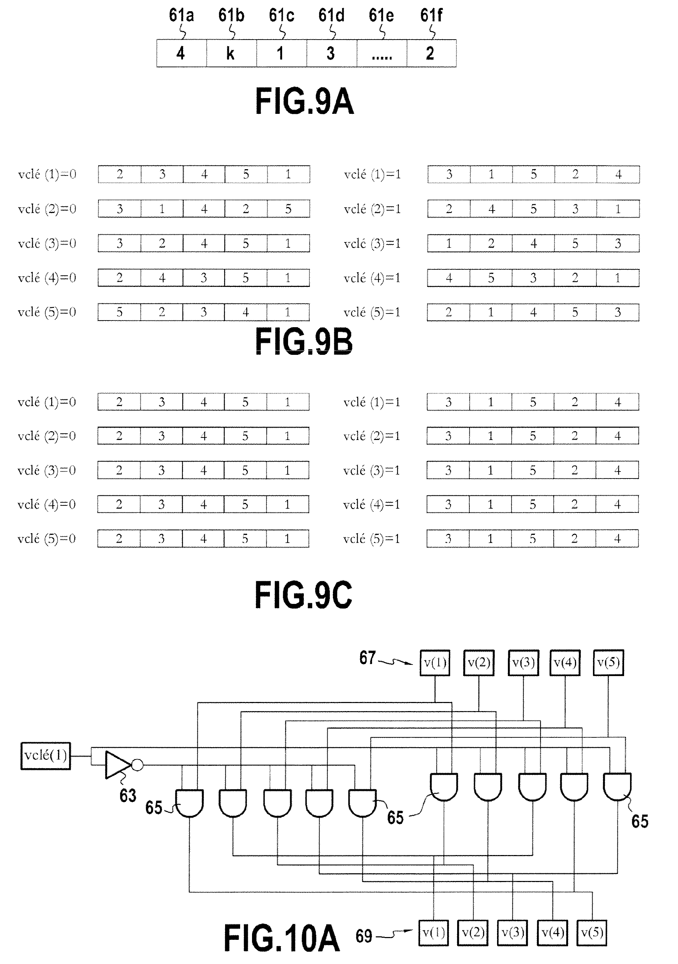

Les figures 9A à 9C illustrent le fonctionnement des permutations surjective ou bijective utilisées dans les exemples précédents.

Selon ces exemples la fonction de permutation P répond à plusieurs cas de figures. Dans un cas, la taille de la clé de chiffrement/déchiffrement est égale à la taille des données en entrée qui est égale aussi à la taille des données de sortie. Dans un autre cas, la fonction de permutation P est paramétrable pour pouvoir être appliquée à des données en entrée de taille k (taille du vecteur d'état V) et m (taille des données à chiffrer/déchiffrer U/V). Dans d'autres cas, la fonction de permutation P est paramétrable pour pouvoir être appliquée à des données en entrée de taille quelconque permettant d'avoir accès aux fonctionnalités de modification du nombre de bits chiffrés à chaque itération.

Pour des données en entrée variables et une clé fixe, la permutation P est une permutation bijective (à une valeur de données en entrée correspond une et une seule valeur en sortie et vice-versa) et donc réversible sous réserve de connaître la valeur de la clé. Ces propriétés de permutation bijective sont exploitées dans les fonctions ou moyens d'isolement du module 17 de chiffrement/déchiffrement.

Pour des données en entrée, et une clé variable identique aux données en entrée (clé=données), la permutation est une permutation surjective (à plusieurs valeurs de donnée en entrée peut correspondre une même valeur en sortie ou inversement, à une valeur en sortie peut correspondre plusieurs valeurs possibles de données en entrée) et donc non réversible. Ces propriétés de permutation surjective sont exploitées dans les opérations du générateur 1 pseudo-aléatoire.

La figure 9A montre un tableau de permutation comportant plusieurs cases 61a-61f et où dans chaque case on indique la position d'origine du bit qui apparaît à l'emplacement considérée. Lors d'un déplacement chaque bit conserve sa valeur : v( i ) = valeur binaire (0 ou 1) du $i^{ème}$ bit des données considérées.

Selon cet exemple, le premier bit des données en entrée est déplacé au $3^{ème}$ emplacement (case 61c) des données en sortie en conservant sa valeur V(1). Le deuxième bit des données en entrée est déplacé au $k^{ème}$ emplacement (case 61f) des données en sortie en conservant sa valeur V(2). Le troisième bit des données en entrée est déplacé au $4^{ème}$ emplacement (case 61d) des données en sortie en conservant sa valeur V(3). Le quatrième bit des données en entrée est déplacé au $1^{er}$ emplacement des données en sortie en conservant sa valeur V(4). Le $k^{ème}$ bit des données en entrée est déplacé au $2^{ème}$ emplacement (case61b) des données en sortie en conservant sa valeur V(k).

Avantageusement, pour appliquer une permutation sur des données à permuter, on associe d'abords pour chaque bit de la clé de chiffrement/déchiffrement de taille k, deux permutations élémentaires distinctes sélectionnées en fonction de la valeur du bit. Ensuite, on enchaîne sur les données à permuter, k permutations élémentaires paramétrées par la valeur de chacun des k bits de la clé de chiffrement/déchiffrement.

Ainsi, pour des données de taille k que!conque à traiter, la permutation P procède en deux étapes. Selon une première étape, une table de dimension (k , 2 k), constituée de k lignes de deux permutations de taille k chacune, qui sert aussi de matrice de routage en implémentation matérielle, est calculée préalablement. Selon une deuxième étape et lors de l'utilisation de la fonction de permutation P, chaque ligne i de cette table fournit deux permutations possibles, choisies en fonction de la valeur vclé( i ) du $i^{ème}$ bit de la clé utilisée. Pour une valeur donnée de clé, la permutation P enchaîne donc sur les données d'entrée k permutations respectivement paramétrées par la valeur de chacun des k bits de la clé de chiffrement/déchiffrement.

Le pré-calcul de la table de dimension (k, 2 k) ou le remplissage de la table peut s'effectuer manuellement avec comme seules contraintes d'utiliser deux permutations différentes sur chaque ligne et des tables identiques pour chiffrer et déchiffrer les données. Un brassage de qualité peut être obtenu en utilisant pour chacun des k étages un couple identique de deux permutations différentes. Dans ce cas, les deux permutations utilisées doivent être en tous points différentes. C'est-à-dire, pour tout i, la position du bit i en sortie pour la première permutation est différente de la position du bit i en sortie pour la deuxième permutation.

La figure 9B montre un exemple de cinq permutations successives différentes appliquées sur les données d'entrée en fonction de la valeur vclé(i) du $i^{ème}$ bit de la clé de chiffrement/déchiffrement pour k=5.

La figure 9C montre un exemple d'un couple identique de deux permutations différentes utilisé pour chacun des cinq étages, à appliquer sur les données d'entrée en fonction de la valeur vclé(i) du $i^{ème}$ bit de la clé de chiffrement/déchiffrement pour k=5.

Un avantage principal de la permutation P décrite précédemment réside dans une implémentation matérielle très simple, qui peut être uniquement avec des fonctions logiques du type « NON » et « ET »,

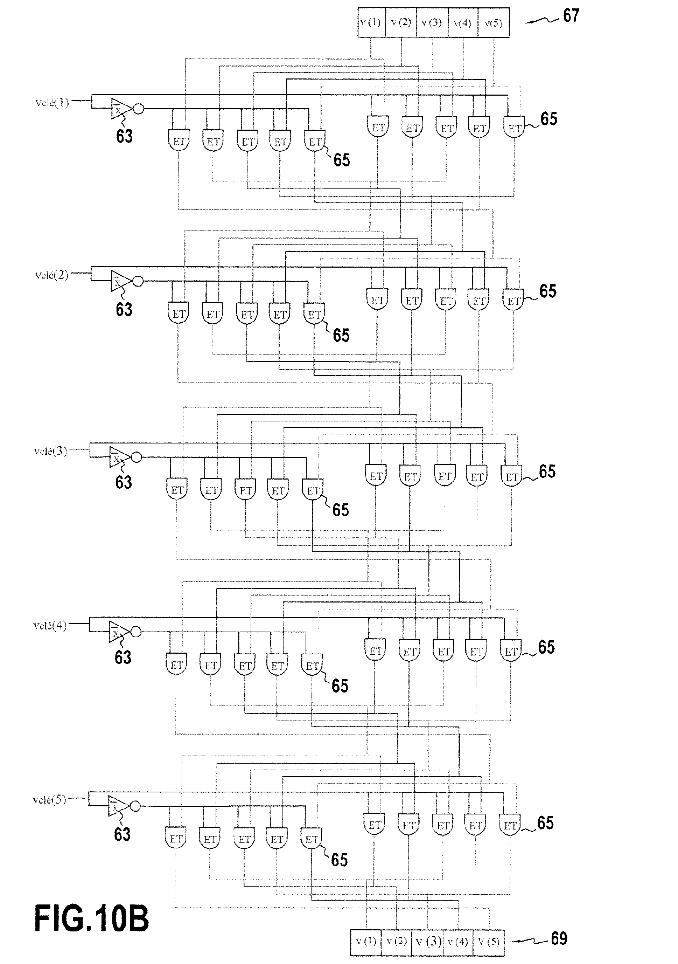

En effet, les figures 10A et 10B illustrent des moyens de permutation comportant des portes logiques 63, 65 destinées à associer pour chaque bit d'une clé de chiffrement/déchiffrement de taille k correspondant à la valeur initial du vecteur d'état, deux permutations élémentaires distinctes sélectionnées en fonction de la valeur du bit et à enchaîner k permutations élémentaires paramétrées par la valeur de chacun des k bits de ladite clé de chiffrement/déchiffrement.

Plus particulièrement l'exemple de la figure 10A montre le câblage du premier étage de la fonction de permutation P précédente pour k=5 en utilisant une porte logique « NON » 63 et des porte logiques « ET » 65.

La porte logique « ET » 65 correspond dans cette application à un interrupteur (ou transistor en implémentation matérielle) piloté par la valeur vclé d'un bit de la clé de chiffrement/déchiffrement ou son complément. L'interrupteur est donc ouvert ou fermé en fonction de la valeur vclé du bit de la clé ou de son complément (passant ou bloqué dans le cas d'un transistor).

Les étages s'enchaînent ainsi les uns après les autres, la sortie de l'étage h-1 alimentant l'entrée de l'étage h.

En appliquant sur les entrées du premier étage les valeurs respectives de chaque bit des données à crypter, ainsi que sur l'entrée de clé de chaque étage la valeur respective du bit de la clé qui lui est associé, on obtient une fonction logique exécutable en une seule opération sur l'ensemble des k étages, correspondant à k permutations effectuées sur des données en entrée de taille k et paramétrées par une clé de taille k. Si un couple identique de deux permutations différentes est utilisé pour chacun des k étages, k modules identiques sont utilisés.

La figure 10B montre un exempte dimplémentation matérielle d'un couple identique de deux permutations différentes, utilisé pour chacun des 5 étages à appliquer sur les données d'entrée en fonction de la valeur vclé(i) pour k=5 tel que décrit à la figure 9c.

En implémentation logicielle, on peut utiliser une fonction récursive ayant pour paramètres : les données en entrée, la clé de chiffrement/déchiffrement, la table de permutation et l'étage i considéré. Le calcul de la permutation P s'effectue extrêmement rapidement, en appelant la « Fonction récursive » suivante avec i=k :

Données de sortie =Fonction récursive (Données d'entrée, clé, Table de permutation, i).

Si i=1, alors

Si Vclé(1)=0, alors
Données de sortie = Permutation(1)_Vclé_0 (Données d'entrée)
Sinon,
Données de sortie = Permutation(1)_Vclé_1 (Données d'entrée)
Fin de Si

Sinon,

Si Vclé( i )=0, alors
Données de sortie = Permutation( i )_Vclé_0 (Fonction récursive (Données d'entrée, Clé, Table de Permutation, i-1))
Sinon,
Données de sortie = Permutation( i )_Vcté_1 (Fonction récursive (Données d'entrée, Clé, Table de Permutation, i-1))
Fin de Si

Fin de Si
Fin de fonction.

Les différents modes de réalisation du procédé et dispositif de chiffrement/déchiffrement selon l'invention peuvent être utilisés pour des applications du chiffrement par flot à haut débit (Télécommunications, diffusion de contenu multimédia protégé, chiffrement à la volée de données sur serveurs, ordinateur personnel et applications logicielles etc...). En outre, la structure même du procédé de chiffrement/déchiffrement lui permet des applications dans le domaine du multiplexage cryptographique.

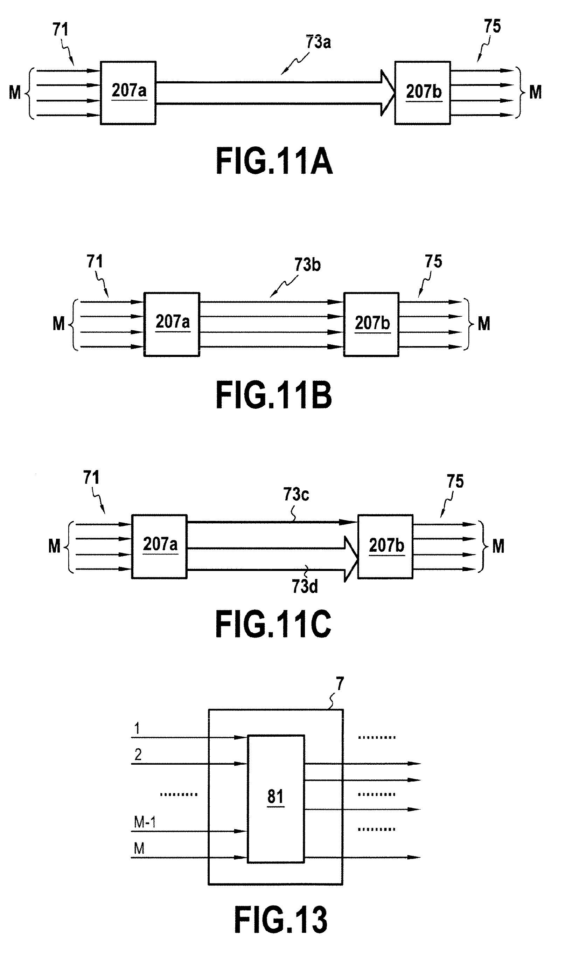

Les figures 11A à 11C illustrent différents exemples des multiplexages cryptographiques.

D'une manière générale, un multiplexage cryptographique consiste à faire converger M messages clairs 71 à crypter vers un même dispositif 207a de chiffrement (ou de cryptage) qui génère M messages cryptés. Ces M messages cryptés sont alors combinés et transmis par un même canal 73a (figure 11A), ou transmis séparément par des canaux différents 73b (figure 11B) à un utilisateur auquel ou à une application à laquelle ils sont destinés.

La figure 11C montre que des solutions mixtes peuvent être envisagées en fonction du nombre de canaux de transmission disponibles et des débits respectifs de chacun de ces canaux. Selon cet exemple, un premier canal 73c transmet un message crypté unique et un second canal 73d transmet M-1 messages cryptés combinés.

Un dispositif de déchiffrement 207b (ou de décryptage) reconstitue alors les M messages clairs 75 à partir des M messages cryptés. Il est impossible de reconstituer un seul ou l'intégralité des M messages clairs si on ne dispose pas des M messages cryptés. Cette solution permet de mutualiser l'application cryptographique tout en offrant une solution simple et efficace pour protéger de multiples contenus devant cheminer sur un ou plusieurs canaux non sécurisés.

Le procédé de chiffrement/déchiffrement selon l'invention permet d'effectuer le multiplexage cryptographique tel que décrit précédemment en utilisant un seul générateur pseudo-aléatoire dimensionné en conséquence et M modules de chiffrement/déchiffrement en parallèle, Ceci permet une imp!ément3tion matérielle ou !ogicie!!e extrêmement simple, bénéficiant des performances de rapidité et de résistance à la cryptanalyse du procédé de chiffrement/déchiffrement, ainsi que des fonctionnalités de blocs de taille variable, d'itérations à vide et de désynchronisation des flux, appliquées à M messages différents.

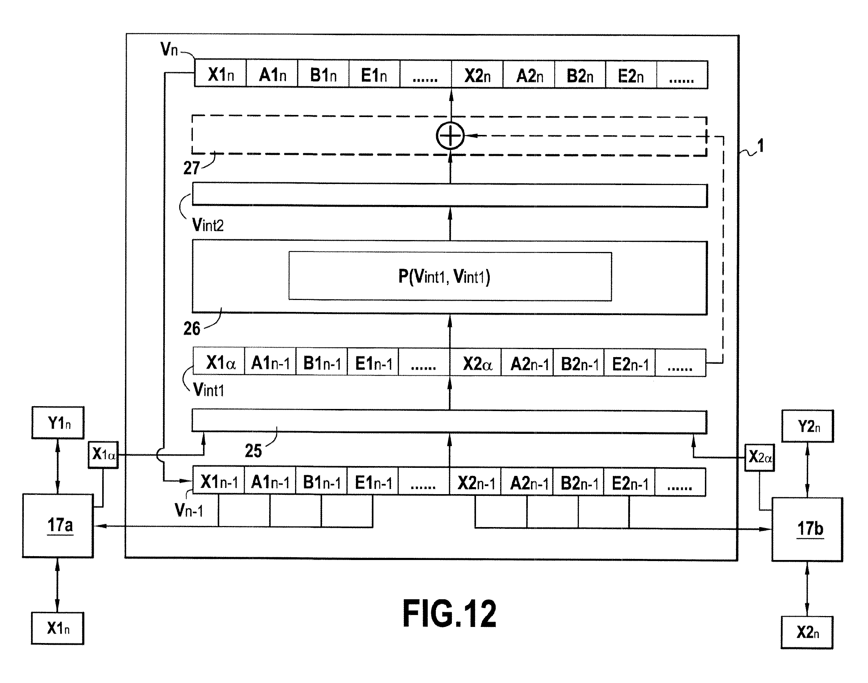

En effet, la figure 12 illustre un dispositif de chiffrement/déchiffrement permettant de réaliser un multiplexage cryptographique et comportant un seul générateur 1 pseudo-aléatoire et deux modules 17a, 17b de chiffrement/déchiffrement en parallèle.

Dans ce cas, le générateur 1 pseudo-aléatoire calcule à chaque itération une valeur courante d'un vecteur d'état comportant un premier ensemble de sections de variables d'état et au moins un deuxième ensemble de sections de variables d'état.

D'une manière générale, pour multiplexer M messages (M=2 sur la figure 12), la valeur courante $V_n$ du vecteur d'état V du générateur 1 pseudo-aléatoire prend la forme suivante :

$$V_n = \left( \cdots X1_n, A1_n, B1_n, E1_n, \cdots, X2_n, A2_n, B2_n, E2_n, \cdots XM_n, AM_n, BM_n, EM_n, \cdots \right)$$

Par ailleurs, le premier module 17a de chiffrement/déchiffrement calcule un premier mot de sortie courant $Y1_n/U1_n$ selon une première application réversible dépendante d'un premier mot d'entrée courant $U1_n/Y1_n$ et du premier ensemble de sections $X1_{n-1}$, $A1_{n-1}$, $B1_{n-1}$, $E1_{n-1}$ de la valeur précédente $V_{n-1}$ du vecteur d'état. La valeur intermédiaire

X1$_\alpha$ est transmise au générateur 1 pseudo-aléatoire.

Le deuxième module 17b de chiffrement/déchiffrement calcul un deuxième mot de sortie courant Y2$_n$/ U2$_n$ selon une deuxième application réversible dépendante d'un deuxième mot d'entrée courant U2$_n$/Y2$_n$ et du deuxième ensemble de sections X2$_{n-1}$, A2$_{n-1}$, B2$_{n-1}$, E2$_{n-1}$ de la valeur précédente V$_{n-1}$ du vecteur d'état. La valeur intermédiaire X2$_\alpha$ est transmise au générateur 1 pseudo-aléatoire.

La figure 13 illustre un exemple très schématique d'un dispositif de chiffrement/déchiffrement comportant des moyens 81 de multiplexage cryptographique.

Selon cet exemple, les moyens 81 de multiplexage cryptographique peuvent multiplexer au moins deux blocs de messages en clair pour former au moins deux blocs de messages chiffrés, chaque bloc de message en clair correspondant à une succession de mots d'entrées. Les moyens 81 de multiplexage cryptographique correspondent à paramétrage d'un générateur 1 pseudo-aléatoire selon les figures précédentes, par un vecteur d'état comprenant une cinquième variable d'état F. Ainsi, le générateur 1 pseudo-aléatoire peut ordonnancer les différents blocs de messages chiffrés à chaque itération en fonction de la cinquième variable d'état F comprise dans le vecteur d'état.

Par conséquent, l'ordonnancement des M blocs cryptés à chaque itération, combinés ou non, dans les canaux de transmission, peut être préétabli, ou bien fonction d'une variable pseudo-aléatoire non-accessible (une section du vecteur d'état), dépendant de la clé de chiffrement/déchiffrement et de l'intégralité de la séquence des mots d'entrée appliquées. Par exemple, l'ordonnancement des M blocs cryptés, combinés ou non, peut être fourni par la permutation P paramétrée par la cinquième variable d'état F comprise dans le vecteur d'état.

Le paramètre de l'ordonnancement des M blocs du message crypté combiné lors de l'itération n est fourni par la valeur précédente F$_{n-1}$ de la cinquième variable d'état F. F$_{n-1}$ étant une section de taille M de la valeur précédente V$_{n-1}$ du vecteur d'état, isolé des mots d'entrée et des mots de sortie et dépendant de la clé et de l'intégralité de la séquence des mots d'entrée appliquées.

L'ordonnancement des M blocs du message crypté, combinés ou non, dans les canaux de transmission à chaque itération est donc pseudo-aléatoire, dépendant de la clé et de l'intégralité de la séquence des mots d'entrée appliquées. La moindre modification de la séquence des mots d'entrée entraîne donc systématiquement une modification de l'intégralité de l'ordonnancement des blocs du message crypté, combinés ou non, postérieur à cette modification, dans les canaux de transmission.

Par ailleurs, on notera que le dispositif de chiffrement/déchiffrement de l'invention peut être mis en oeuvre par un système informatique comportant de manière classique une unité centrale de traitement commandant par des signaux une mémoire, une unité d'entrée et une unité de sortie raccordées entre elles par des bus de données.

De plus, ce système informatique peut être utilisé pour exécuter un programme d'ordinateur comportant des instructions de codes de programme pour la mise en oeuvre du procédé de chiffrement/déchiffrement selon l'invention.

En effet, l'invention vise aussi un produit programme d'ordinateur téléchargeable depuis un réseau de communication comprenant des instructions de codes de programme pour l'exécution des étapes du procédé de chiffrement/déchiffrement selon l'invention lorsqu'il est exécuté sur un ordinateur. Ce programme d'ordinateur peut être stocké sur un support lisible par ordinateur et peut être exécutable par un microprocesseur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

La présente invention comporte ainsi un générateur pseudo aléatoire paramétré par une clé de chiffrement de taille k quelconque, effectuant des itérations sur un vecteur d'état alimenté à chaque itération par un résultat intermédiaire issu d'un module de chiffrement/déchiffrement, et donc dépendant de l'intégralité de la séquence des entrées appliquées. Le module de chiffrement/déchiffrement intègre des fonctions d'auto-isolement du générateur pseudo-aléatoire et assure à chaque itération le chiffrage de données d'entrée, en fonction des valeurs de plusieurs sections du vecteur d'état du générateur pseudo-aléatoire.

Le dispositif de chiffrement/déchiffrement selon l'invention comporte alors les avantages suivantes :

Le module de chiffrement/déchiffrement est réversible en implémentation matérielle et logicielle. Ainsi, il n'est pas nécessaire d'avoir de programmes/circuits différenciés pour les deux fonctions.

Le générateur pseudo-aléatoire est non réversible et est paramétré par une clé régénérée à chaque itération.

Une permutation P est effectuée en une seule opération extrêmement rapide en implémentation matérielle et logicielle, utilisée sous une forme non-inversible P(données, données) dans le générateur pseudo-aléatoire et sous une forme inversible P(données, clé) dans le module de chiffrement/déchiffrement.

Le générateur pseudo-aléatoire n'a pas de période particulière et ne suit pas de cycle pré-établi. La valeur du vecteur d'état dépend de la clé de chiffrement et de l'intégralité de la séquence des mots d'entrées appliquées, sans cycle déterministe, car basculant à chaque itération d'un attracteur (cycle spécifique à une séquence d'entrées particulières) à un autre.

Le générateur pseudo-aléatoire à vecteur d'état, dont la valeur ne peut être reconstituée à partir de l'observation des séquences de mots de sortie, ni votontairement amenée à une valeur préétablie à l'aide d'une séquence de mots d'entrées (vecteur d'état non-observable et non-commandable). Le vecteur d'état s'isole des mots d'entrée et de sortie à l'aide des fonctions d'isolement, paramétrées par les valeurs de certaines de ses propres variables d'état (auto-isolement). Outre la résistance à la cryptanalyse, cette propriété permet de s'affranchir des problèmes de modification du vecteur d'initialisation à chaque démarrage du procédé de chiffrement/déchiffrement. La clé de chiffrement qui fait office de vecteur d'initialisation n'a donc pas à être modifiée. On peut en plus utiliser un entête de message débutant par un Nonce (Number used Once) du type numéro de message, afin d'éviter davantage toute fuite d'information concernant le fait que les messages aient des entêtes similaires.

L'invention présente une possibilité de modification du nombre de bits cryptés à chaque itération en fonction d'une variable pseudo-aléatoire non-accessible (une section du vecteur d'état), dépendant de la clé de chiffrement et de l'intégralité de la séquence des mots d'entrée appliquées.

Une autre possibilité consiste à effectuer des « cycles à vide » par le générateur pseudo-aléatoire (itérations effectuées sur le vecteur d'état sans chiffrement effectués sur les entrées), en fonction d'une variable pseudo-aléatoire non-accessible (une section du vecteur d'état), dépendant de la clé de chiffrement et de l'intégralité de la séquence des mots d'entrée appliquées, entraînant une désynchronisation du générateur pseudo-aléatoire et du module de chiffrement/déchiffrement des données.

Encore une autre possibilité consiste à utiliser le dispositif de chiffrement/déchiffrement en multiplexeur cryptographique, consistant à faire converger M messages clairs à crypter vers un même module de chiffrement qui générera M messages cryptés. Il est impossible de reconstituer un seul ou l'intégralité des M messages clairs si on ne dispose pas des M messages cryptés. Ces messages cryptés peuvent être combinés entre eux afin de réduire le nombre de canaux de transmission. L'ordonnancement des blocs cryptés à chaque itération, combinés ou non, dans les canaux de transmission peut-être préétabli ou bien fonction d'une variable pseudo-aléatoire non-accessible (une section du vecteur d'état), dépendant de la clé de chiffrement et de l'intégralité de la séquence des mots d'entrées appliquées.

## Revendications

1. Procédé de chiffrement/déchiffrement d'une séquence de données d'entrée, **caractérisé en ce qu'**à partir d'une valeur initiale ($V_0$) d'un vecteur d'état V et d'une succession de mots d'entrées ($U_n$, $Y_n$) formant ladite séquence d'entrée, on génère de manière itérative une succession de valeurs dudit vecteur d'état et une succession de mots de sorties ($Y_n$, Un), chaque itération comportant les étapes suivantes :

   - une étape de génération pseudo-aléatoire dans laquelle on calcule une valeur courante ($V_n$) du vecteur d'état selon une application non inversible dépendante d'une valeur précédente ($V_{n-1}$) du vecteur d'état et,
   - une étape de chiffrement/déchiffrement dans laquelle on calcule un mot de sortie courant ($Y_n$, Un) selon une application réversible dépendante d'un mot d'entrée courant ($U_n$, $Y_n$) et de ladite valeur précédente ($V_{n-1}$) du vecteur d'état.

2. Procédé de chiffrement/déchiffrement selon la revendication 1, **caractérisé en ce qu'**à chaque itération l'étape de génération pseudo-aléatoire comporte en outre, une alimentation dudit vecteur d'état par une valeur intermédiaire courante ($X_\alpha$) issue d'un calcul réalisé à l'étape de chiffrement/déchiffrement et dépendante de ladite valeur précédente($V_{n-1}$) du vecteur d'état et dudit mot d'entrée courant.

3. Procédé de chiffrement/déchiffrement selon la revendication 1 ou la revendication 2, **caractérisé en ce que** ledit vecteur d'état comporte un ensemble de sections comprenant au moins une première variable d'état (X), une deuxième variable d'état (A), et une troisième variable d'état (B).

4. Procédé de chiffrement/déchiffrement selon la revendication 3, **caractérisé en ce que** l'étape de génération pseudo-aléatoire de chaque itération comporte les sous-étapes suivantes:

   - transmission à l'étape de chiffrement/déchiffrement de la valeur précédente du vecteur d'état comprenant au moins la valeur précédente ($X_{n-1}$) de la première variable d'état, la valeur précédente ($A_{n-1}$) de la deuxième variable d'état, et la valeur précédente ($B_{n-1}$) de la troisième variable d'état,
   - réception depuis l'étape de chiffrement/déchiffrement de la valeur intermédiaire courante ($X_\alpha$),
   - calcul d'une valeur courante d'un premier vecteur d'état intermédiaire ($v_{int1}$) en remplaçant la valeur précédente ($X_{n-1}$) de la première variable d'état par ladite valeur intermédiaire courante ($X_\alpha$), et
   - application d'une permutation surjective sur ladite valeur courante du premier vecteur d'état intermédiaire

($V_{int1}$) pour former une valeur courante d'un second vecteur d'état intermédiaire ($V_{int2}$).

**5.** Procédé de chiffrement/déchiffrement selon la revendication 4, **caractérisé en ce que** ladite valeur courante du vecteur d'état correspond à ladite valeur courante du second vecteur d'état intermédiaire ($V_{int2}$).

**6.** Procédé de chiffrement/déchiffrement selon la revendication 4, **caractérisé en ce que** ladite valeur courante ($V_n$) du vecteur d'état correspond au résultat d'une opération ou-exclusif entre la valeur courante du premier vecteur d'état intermédiaire ($V_{int1}$) et la valeur courante du second vecteur d'état intermédiaire ($V_{int2}$).

**7.** Procédé de chiffrement/déchiffrement selon la revendication 4, **caractérisé en ce que** ladite valeur courante du vecteur d'état correspond au résultat d'une opération ou-exclusif entre un vecteur constant et la valeur courante du second vecteur d'état intermédiaire ($V_{int2}$).

**8.** Procédé de chiffrement/déchiffrement selon l'une quelconque des revendications 1 à 7, **caractérisé en ce que** ladite étape de génération pseudo-aléatoire est une première étape de génération pseudo-aléatoire formant une première valeur courante ($V1_n$) d'un premier vecteur d'état, ladite première étape de génération pseudo-aléatoire étant combinée en parallèle avec au moins une deuxième étape de génération pseudo-aléatoire formant une deuxiè- me valeur courante ($V2_n$) d'un deuxième vecteur d'état et **en ce que** ladite valeur courante ($V_n$) du vecteur d'état est le résultat d'une opération ou-exclusif entre la première valeur courante ($V1_n$) du premier vecteur d'état et ladite au moins deuxième valeur courante ($V2_n$) du deuxième vecteur d'état.

**9.** Procédé de chiffrement/déchiffrement selon l'une quelconque des revendications 2 à 8, **caractérisé en ce que** ladite étape de chiffrement/déchiffrement comporte une réception depuis l'étape de génération pseudo-aléatoire de la valeur précédente du vecteur d'état comprenant au moins la valeur précédente ($X_{n-1}$) de la première variable d'état, la valeur précédente ($A_{n-1}$) de la deuxième variable d'état, et la valeur précédente ($B_{n-1}$) de la troisième variable d'état, et **en ce que** l'application réversible pour le calcul du mot de sortie courant comporte deux fonctions d'isolement pour isoler la valeur intermédiaire courante, chacune des fonctions d'isolement comprenant au moins une permutation bijective et une opération ou-exclusif.

**10.** Procédé de chiffrement/déchiffrement selon la revendication 9, **caractérisé en ce qu'**il comporte un mode de chiffrement dans lequel la séquence de données d'entrée correspond à un message clair et la succession de mots de sorties correspond à un message chiffré, et **en ce que** dans ledit mode de chiffrement ledit calcul d'un mot de sortie courant ($Y_n$) comporte les sous-étapes suivantes:

- calcul d'un premier mot intermédiaire ($G_{1n}$) en appliquant une première permutation bijective sur un couple formé par ledit mot d'entrée courant ($U_n$) et une valeur précédente ($A_{n-1}$) de la deuxième variable d'état,
- calcul d'un deuxième mot intermédiaire ($G_{2n}$) en appliquant une opération ou-exclusif entre ledit premier mot intermédiaire ($G_{1n}$) et ladite valeur précédente ($A_{n-1}$) de la deuxième variable d'état,
- calcul d'un troisième mot intermédiaire ($G_{3n}$) en appliquant une deuxième permutation bijective sur un couple formé par ledit deuxième mot intermédiaire ($G_{2n}$) et une valeur précédente ($X_{n-1}$) de la première variable d'état,
- calcul de ladite valeur intermédiaire courante ($X_\alpha$) en appliquant une opération ou-exclusif entre ledit troisième mot intermédiaire ($G_{3n}$) et ladite valeur précédente ($X_{n-1}$) de la première variable d'état, ladite valeur intermédiaire courante ($X_\alpha$) étant transmise à l'étape de génération pseudo-aléatoire,
- calcul d'un quatrième mot intermédiaire ($G_{4n}$) en appliquant une troisième permutation bijective sur un couple formé par ladite valeur intermédiaire courante ($X_\alpha$) et la valeur précédente ($X_{n-1}$) de la première variable d'état,
- calcul d'un cinquième mot intermédiaire ($G_{5n}$) en appliquant une opération ou-exclusif entre ledit quatrième mot intermédiaire ($G_{4n}$) et ladite valeur précédente ($B_{n-1}$) de la troisième variable d'état, et
- calcul dudit mot de sortie courant ($Y_n$) en appliquant une quatrième permutation bijective sur un couple formé par ledit cinquième mot intermédiaire ($G_{5n}$) et une valeur précédente ($B_{n-1}$) de la troisième variable d'état.

**11.** Procédé de chiffrement/déchiffrement selon la revendication 10, **caractérisé en ce qu'**il comporte un mode de déchiffrement dans lequel la séquence de données d'entrée correspond à un message chiffré et la succession de mots de sorties correspond à un message clair et **en ce que** dans ledit mode de déchiffrement ledit calcul d'un mot de sortie courant ($U_n$) comporte les sous étapes suivantes:

- calcul du cinquième mot intermédiaire ($G_{5n}$) en appliquant une permutation inverse de la quatrième permutation bijective sur un couple formé par un mot d'entrée courant ($Y_n$) et la valeur précédente ($B_{n-1}$) de la troisième variable d'état,

- calcul du quatrième mot intermédiaire ($G_{4n}$) en appliquant une opération ou-exclusif entre ledit cinquième mot intermédiaire ($G_{5n}$) et ladite valeur précédente ($B_{n-1}$) de la troisième variable d'état,

- calcul de ladite valeur intermédiaire courante ($X_\alpha$) en appliquant une permutation inverse de la troisième permutation bijective sur un couple formé par ledit quatrième mot intermédiaire ($G_{4n}$) et la valeur précédente ($X_{n-1}$) de la première variable d'état, ladite valeur intermédiaire courante ($X_\alpha$) étant transmise à l'étape de génération pseudo-aléatoire,

- calcul du troisième mot intermédiaire ($G_{3n}$) en appliquant une opération ou-exclusif entre ladite valeur intermédiaire courante ($X_\alpha$) et ladite valeur précédente ($X_{n-1}$) de la première variable d'état,

- calcul du deuxième mot intermédiaire ($G_{2n}$) en appliquant une permutation inverse de la deuxième permutation bijective sur un couple formé par ledit troisième mot intermédiaire ($G_{3n}$) et la valeur précédente ($X_{n-1}$) de la première variable d'état,

- calcul du premier mot intermédiaire ($G_{1n}$) en appliquant une opération ou-exclusif entre ledit deuxième mot intermédiaire ($G_{2n}$) et ladite valeur précédente ($A_{n-1}$) de la deuxième variable d'état,

- calcul dudit mot de sortie courant ($U_n$) en appliquant une permutation inverse de la première permutation bijective sur un couple formé par ledit premier mot intermédiaire ($G_{1n}$) et la valeur précédente ($A_{n-1}$) de la deuxième variable d'état.

**12.** Procédé de chiffrement/déchiffrement selon l'une quelconque des revendications 1 à 11, **caractérisé en ce que** ledit vecteur d'état comprend un nombre k déterminé de bits et ladite valeur initiale du vecteur d'état correspond à une clé de chiffrement/déchiffrement paramétrable de taille k, et **en ce que** chaque mot de sortie ou d'entrée comprend un nombre m déterminé de bits inférieur audit nombre k déterminé de bits dudit vecteur d'état.

**13.** Procédé de chiffrement/déchiffrement selon la revendication 12, **caractérisé en ce que** chaque mot de sortie ou d'entrée comprend un nombre w variable de bits pouvant varier à chaque itération tout en étant inférieur audit nombre k déterminé de bits du vecteur d'état et **en ce que** ledit vecteur d'état comporte en outre une quatrième variable d'état (E) indiquant ledit nombre w variable de bits à chaque itération pour adapter les permutations et opérateurs ou-exclusifs de l'étape de chiffrement/déchiffrement audit nombre w variable.

**14.** Procédé de chiffrement/déchiffrement selon la revendication 13, **caractérisé en ce que** l'étape de génération pseudo-aléatoire de chaque itération comporte lorsque ledit nombre w variable est égal à zéro, une application supplémentaire d'une permutation surjective sur ladite valeur du vecteur d'état pour former une valeur courante d'un second vecteur d'état intermédiaire supplémentaire ($V2_{ins}$), ladite valeur courante du second vecteur d'état intermédiaire supplémentaire ($V2_{ins}$) remplaçant ladite valeur courante du vecteur d'état.

**15.** Procédé de chiffrement/déchiffrement selon la revendication 14, **caractérisé en ce qu'**on calcul une nouvelle valeur courante du vecteur d'état en appliquant une opération ou-exclusif entre ladite valeur courante du second vecteur d'état intermédiaire supplémentaire ($V2_{ins}$) et la valeur courante du vecteur d'état, ladite nouvelle valeur courante du vecteur d'état remplaçant ladite valeur courante du vecteur d'état.

**16.** Procédé de chiffrement/déchiffrement selon la revendication 14, **caractérisé en ce qu'**on calcul une nouvelle valeur courante du vecteur d'état en appliquant une opération ou-exclusif entre ladite valeur courante du second vecteur d'état intermédiaire supplémentaire ($V2_{ins}$) et un vecteur constant, ladite nouvelle valeur courante du vecteur d'état remplaçant ladite valeur courante du vecteur d'état.

**17.** Procédé de chiffrement/déchiffrement selon l'une quelconque des revendications 12 à 16, **caractérisé en ce qu'**une permutation appliquée sur des données à permuter comporte les étapes suivantes :

- on associe pour chaque bit de ladite clé de chiffrement/déchiffrement de taille k, deux permutations élémentaires distinctes sélectionnées en fonction de la valeur dudit bit, et
- on enchaîne sur lesdites données à permuter, k permutations élémentaires paramétrées par la valeur de chacun des k bits de ladite clé de chiffrement/déchiffrement.

**18.** Procédé de chiffrement/déchiffrement selon l'une quelconque des revendications 1 à 17, **caractérisé en ce que** :

ledit vecteur d'état comporte un premier ensemble de sections de variables d'état et au moins un deuxième ensemble de sections de variables d'état ;
**en ce que** ladite étape de chiffrement/déchiffrement est une première étape de chiffrement/déchiffrement dans laquelle on calcule un premier mot de sortie courant selon une première application réversible dépendante d'un premier mot d'entrée courant et dudit premier ensemble de sections de ladite valeur précédente du vecteur d'état ; et

**en ce qu'**il comprend au moins une deuxième étape de chiffrement/déchiffrement dans laquelle on calcule au moins un deuxième mot de sortie courant selon au moins une deuxième application réversible dépendante d'au moins un deuxième mot d'entrée courant et dudit au moins deuxième ensemble de sections de ladite valeur précédente du vecteur d'état.

**19.** Procédé de chiffrement/déchiffrement selon l'une quelconque des revendications 1 à 18, **caractérisé en ce qu'**il comporte en outre un multiplexage cryptographique d'au moins deux blocs de messages en clair pour former au moins deux blocs de messages chiffrés, chaque bloc de message en clair correspondant à une succession de mots d'entrées, et **en ce que** lesdits au moins deux blocs de messages chiffrés sont ordonnancés à chaque itération en fonction d'une cinquième variable d'état (F) comprise dans ledit vecteur d'état.

**20.** Procédé de génération d'une séquence de données pseudo aléatoire, dans lequel à partir d'une valeur initiale d'un vecteur d'état, on forme ladite séquence de données pseudo aléatoire par une génération itérative d'une succession de valeurs dudit vecteur d'état, chaque itération calculant une valeur courante du vecteur d'état selon une application non inversible dépendante d'une valeur précédente du vecteur d'état.

**21.** Procédé de génération selon la revendication 20, **caractérisé en ce qu'**à chaque itération, on alimente ledit vecteur d'état par une valeur intermédiaire courante calculée selon une autre application dépendante de ladite valeur précédente du vecteur d'état et d'un mot d'entrée courant appartenant à une séquence de données d'entrée.

**22.** Dispositif de chiffrement/déchiffrement d'une séquence de données d'entrée, **caractérisé en ce qu'**il comporte des moyens de génération (11) pour générer de manière itérative une succession de valeurs d'un vecteur d'état et une succession de mots de sorties à partir d'une valeur initiale dudit vecteur d'état et d'une succession de mots d'entrées formant ladite séquence d'entrée, lesdits moyens de génération comportant :

- un générateur (1) pseudo-aléatoire destiné à calculer à chaque itération une valeur courante ($V_n$) du vecteur d'état selon une application non inversible dépendante d'une valeur précédente ($V_{n-1}$) du vecteur d'état et,
- un module (17) de chiffrement/déchiffrement destiné à calculer à chaque itération un mot de sortie courant ($Y_n$, Un) selon une application réversible dépendante d'un mot d'entrée courant (Un, $Y_n$) et de ladite valeur précédente ($V_{n-1}$) du vecteur d'état.

**23.** Dispositif de chiffrement/déchiffrement selon la revendication 22, **caractérisé en ce qu'**à chaque itération ledit générateur pseudo-aléatoire alimente ledit vecteur d'état par une valeur intermédiaire courante ($X_\alpha$) issue d'un calcul réalisé par le module (17) de chiffrement/déchiffrement et dépendante de ladite valeur précédente du vecteur d'état et dudit mot d'entrée courant.

**24.** Dispositif de chiffrement/déchiffrement selon la revendication 23, **caractérisé en ce que** ledit générateur (1) pseudo-aléatoire comporte :

- des moyens de transmission (21) pour transmettre à chaque itération audit module de chiffrement/déchiffrement la valeur précédente du vecteur d'état comprenant au moins une valeur précédente ($X_{n-1}$) d'une première variable d'état, une valeur précédente ($A_{n-1}$) d'une deuxième variable d'état, et une valeur précédente ($B_{n-1}$) d'une troisième variable d'état,
- des moyens de réception (23) pour recevoir depuis le module de chiffrement/déchiffrement la valeur intermédiaire courante ($X_\alpha$),
- un premier moyen de calcul (25) pour calculer une valeur courante d'un premier vecteur d'état intermédiaire ($V_{int1}$) en remplaçant la valeur précédente ($X_{n-1}$) de la première variable d'état par ladite valeur intermédiaire courante ($X_\alpha$), et
- un deuxième moyen de calcul (26) comprenant des moyens de permutation (26a) surjective pour appliquer une permutation surjective sur ladite valeur courante du premier vecteur d'état intermédiaire ($V_{int1}$) pour former une valeur courante d'un second vecteur d'état intermédiaire ($V_{int2}$).

**25.** Dispositif de chiffrement/déchiffrement selon la revendication 24, **caractérisé en ce que** ledit générateur pseudo-aléatoire comporte en outre un troisième moyen de calcul (27) comprenant une porte ou-exclusif (27a) combinant la valeur courante du premier vecteur d'état intermédiaire ($V_{int1}$) et la valeur courante du second vecteur d'état intermédiaire ($V_{int2}$).

**26.** Dispositif de chiffrement/déchiffrement selon la revendication 24, **caractérisé en ce que** ledit générateur pseudo-aléatoire comporte en outre un troisième moyen de calcul comprenant une porte ou-exclusif combinant un vecteur constant et la valeur courante du second vecteur d'état intermédiaire ($V_{int2}$).

**27.** Dispositif de chiffrement/déchiffrement selon l'une quelconque des revendications 22 à 26, **caractérisé en ce qu'**il comporte un premier générateur (101) pseudo-aléatoire formant une première valeur courante d'un premier vecteur d'état et au moins un deuxième générateur (102) pseudo-aléatoire formant au moins une deuxième valeur courante d'un deuxième vecteur d'état et **en ce qu'**il comporte en outre une porte ou-exclusif combinant en parallèle lesdits premier et au moins deuxième générateurs pseudo-aléatoire de sorte que ladite valeur courante du vecteur d'état est le résultat d'une opération ou-exclusif entre la première valeur courante du premier vecteur d'état et ladite au moins deuxième valeur courante du deuxième vecteur d'état.

**28.** Dispositif de chiffrement/déchiffrement selon l'une quelconque des revendications 24 à 27, **caractérisé en ce que** ledit module (17) de chiffrement/déchiffrement comporte des moyens de réception (33) pour recevoir depuis le générateur (1) pseudo-aléatoire la valeur précédente du vecteur d'état comprenant au moins la valeur précédente ($X_{n-1}$) de la première variable d'état, la valeur précédente ($A_{n-1}$) de la deuxième variable d'état, et la valeur précédente ($B_{n-1}$) de la troisième variable d'état, et deux moyens d'isolement (35a, 35b) pour isoler la valeur intermédiaire courante, chacun des moyens d'isolement comprenant au moins un moyen de permutation bijective et une porte ou-exclusif.

**29.** Dispositif de chiffrement/déchiffrement selon l'une quelconque des revendications 24 à 28, **caractérisé en ce qu'**un moyen de permutation comporte des portes logiques (63, 65) destinées à associer pour chaque bit d'une clé de chiffrement/déchiffrement de taille k correspondant à la valeur initial dudit vecteur d'état, deux permutations élémentaires distinctes sélectionnées en fonction de la valeur dudit bit, et à enchaîner k permutations élémentaires paramétrées par la valeur de chacun des k bits de ladite clé de chiffrement/déchiffrement.

**30.** Dispositif de chiffrement/déchiffrement selon l'une quelconque des revendications 24 à 29, **caractérisé en ce que** le module (17) de chiffrement/déchiffrement comprend des moyens de permutation et opérateurs ou-exclusifs adaptables à un mot de sortie ou d'entrée comprenant un nombre w variable de bits pouvant varier à chaque itération, ledit nombre w variable de bits étant indiqué par une quatrième variable d'état comprise dans ledit vecteur d'état.

**31.** Dispositif de chiffrement/déchiffrement selon la revendication 30, **caractérisé en ce que** ledit générateur (1) pseudo-aléatoire comprend un quatrième moyen de calcul (45) permettant d'effectuer des itérations à vide sur ledit vecteur d'état en fonction de la valeur w indiquée par la quatrième variable d'état.

**32.** Dispositif de chiffrement/déchiffrement selon l'une quelconque des revendications 22 à 31, **caractérisé en ce que**

ledit générateur (1) pseudo-aléatoire est destiné à calculer à chaque itération une valeur courante d'un vecteur d'état comportant un premier ensemble de sections de variables d'état et au moins un deuxième ensemble de sections de variables d'état ;
**en ce que** le module (17a) de chiffrement/déchiffrement correspond à un premier module de chiffrement/déchiffrement destiné à calculer un premier mot de sortie courant selon une première application réversible dépendante d'un premier mot d'entrée courant et dudit premier ensemble de sections de la valeur précédente dudit vecteur d'état ;
et **en ce qu'**il comprend en outre au moins un deuxième module (17b) de chiffrement/déchiffrement destiné à calculer au moins un deuxième mot de sortie courant selon au moins une deuxième application réversible dépendante d'au moins un deuxième mot d'entrée courant et dudit au moins deuxième ensemble de sections de ladite valeur précédente du vecteur d'état.

**33.** Dispositif de chiffrement/déchiffrement selon l'une quelconque des revendications 22 à 32, **caractérisé en ce qu'**il comporte en outre des moyens de multiplexage cryptographique (81) pour multiplexer au moins deux blocs de messages en clair pour former au moins deux blocs de messages chiffrés, chaque bloc de message en clair correspondant à une succession de mots d'entrées, et **en ce que** lesdits moyens de multiplexage cryptographique sont destinés à ordonnancer lesdits au moins deux blocs de messages chiffrés à chaque itération en fonction d'une cinquième variable d'état (F) comprise dans ledit vecteur d'état.

**34.** Générateur pseudo-aléatoire d'une séquence de données pseudo aléatoire, comprenant des moyens de calcul (5) dans lesquels à partir d'une valeur initiale ($V_0$) d'un vecteur d'état, on forme ladite séquence de données pseudo aléatoire par une génération itérative d'une succession de valeurs dudit vecteur d'état, chaque itération calculant une valeur courante ($V_n$) du vecteur d'état selon une application non inversible dépendante d'une valeur précédente du vecteur d'état.

35. Programme d'ordinateur comportant des instructions de code de programme pour la mise en oeuvre du procédé de chiffrement/déchiffrement selon l'une quelconque des revendications 1 à 21, lorsque ledit programme est chargé et exécuté dans un ordinateur ou un système informatique.

FIG.1

FIG.2

FIG.3

EP 2 001 154 A1

FIG.4

# FIG.5

EP 2 001 154 A1

**FIG.6**

FIG.7

FIG.8

61a  61b  61c  61d  61e  61f

| 4 | k | 1 | 3 | ..... | 2 |

# FIG.9A

vclé (1)=0 | 2 | 3 | 4 | 5 | 1 |   vclé (1)=1 | 3 | 1 | 5 | 2 | 4 |

vclé (2)=0 | 3 | 1 | 4 | 2 | 5 |   vclé (2)=1 | 2 | 4 | 5 | 3 | 1 |

vclé (3)=0 | 3 | 2 | 4 | 5 | 1 |   vclé (3)=1 | 1 | 2 | 4 | 5 | 3 |

vclé (4)=0 | 2 | 4 | 3 | 5 | 1 |   vclé (4)=1 | 4 | 5 | 3 | 2 | 1 |

vclé (5)=0 | 5 | 2 | 3 | 4 | 1 |   vclé (5)=1 | 2 | 1 | 4 | 5 | 3 |

# FIG.9B

vclé (1)=0 | 2 | 3 | 4 | 5 | 1 |   vclé (1)=1 | 3 | 1 | 5 | 2 | 4 |

vclé (2)=0 | 2 | 3 | 4 | 5 | 1 |   vclé (2)=1 | 3 | 1 | 5 | 2 | 4 |

vclé (3)=0 | 2 | 3 | 4 | 5 | 1 |   vclé (3)=1 | 3 | 1 | 5 | 2 | 4 |

vclé (4)=0 | 2 | 3 | 4 | 5 | 1 |   vclé (4)=1 | 3 | 1 | 5 | 2 | 4 |

vclé (5)=0 | 2 | 3 | 4 | 5 | 1 |   vclé (5)=1 | 3 | 1 | 5 | 2 | 4 |

# FIG.9C

# FIG.10A

**FIG.10B**

71 73a 75

M 207a 207b M

## FIG.11A

71 73b 75

M 207a 207b M

## FIG.11B

71 73c 75

M 207a 207b M

73d

## FIG.11C

7

1
2
........
M-1
M

81

........
........
........

## FIG.13

**FIG.12**

**Office européen
des brevets**

**RAPPORT DE RECHERCHE EUROPEENNE**

Numéro de la demande

EP 07 30 1086

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | SCHNEIER B: "Applied Cryptography, protocols, algorithms amd source code in C, second edition, 2.3 ONE-WAY FUNCTIONS" APPLIED CRYPTOGRAPHY, 1996, page 197-206,402-405,410, XP002457447 * alinéa [09.4] - alinéa [09.9] * * figures 9.6-9.14 * | 1-3,8, 12, 20-23, 27,34,35 | INV. H04L9/18 H04L9/06 |
| X | US 2004/228480 A1 (FISKE MICHAEL [US]) 18 novembre 2004 (2004-11-18) | 1,3-5, 12,17, 20,22, 24,29, 34,35 | |
| A | * abrégé * * alinéa [0010] * * alinéa [0016] - alinéa [0111] * * alinéa [0227] - alinéa [0232] * | 9,28 | |
| X | US 5 734 721 A (CLARK JAMES MONROE [US]) 31 mars 1998 (1998-03-31) | 1,3,12, 17,20, 22,29, 34,35 | DOMAINES TECHNIQUES RECHERCHES (IPC) |
| A | * abrégé * * colonne 3, ligne 28 - colonne 7, ligne 34 * * figures 1A,1B,3 * | 9,28 | H04L |

Le présent rapport a été établi pour toutes les revendications

| Lieu de la recherche | Date d'achèvement de la recherche | Examinateur |
|---|---|---|
| La Haye | 5 novembre 2007 | Dujardin, Corinne |

**ANNEXE AU RAPPORT DE RECHERCHE EUROPEENNE
RELATIF A LA DEMANDE DE BREVET EUROPEEN NO.**

EP 07 30 1086

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

05-11-2007

| Document brevet cité au rapport de recherche | Date de publication | Membre(s) de la famille de brevet(s) | Date de publication |
|---|---|---|---|
| US 2004228480 A1 | 18-11-2004 | AUCUN | |
| US 5734721 A | 31-03-1998 | AUCUN | |

EPO FORM P0460

Pour tout renseignement concernant cette annexe : voir Journal Officiel de l'Office européen des brevets, No.12/82